# EUROPEAN PATENT APPLICATION

(11) **EP 2 237 611 A1**
(43) Date of publication of application: **06.10.2010**
(21) Application number: 08869379.1
(22) Date of filing: 25.12.2008
(51) Int. Cl.: H04W 36/22, H04W 4/04

(54) **WIRELESS COMMUNICATION SYSTEM, CONNECTION DESTINATION CHANGING METHOD, AND MANAGEMENT APPARATUS**

(30) Priority: 07.01.2008 JP 2008000570
(71) Applicant: Seiko Instruments Inc., Chiba-shi Chiba 261-8507 (JP)
(72) Inventor: MORIYA, Koichi, Chiba-shi Chiba 261-8507 (JP)
(74) Representative: Turner, Matthew Lawrence
(86) International application number: PCT/JP2008/073538
(87) International publication number: WO 2009/087904

(57) **Abstract**

In a wireless communication system in which wireless communication terminals are connected to a management apparatus via wireless relay apparatus, connection is established between the wireless communication terminal and the wireless relay apparatus in such a manner that communication quality required for the wireless communication system may be satisfied. Based on a connection condition of a wireless relay apparatus (2-m) (m=a, b, ···, n), which is stored in a management apparatus (1), a wireless communication terminal (3-p-q) (p=a, b, ···, n) to be connected to the wireless relay apparatus (2-m) is defined, and then, the connection between the wireless relay apparatus (2-m) and the wireless communication terminal (3-p-q) is changed. By connecting only the defined wireless communication terminal (3-p-q) to the wireless relay apparatus (2-m), a communication load is controlled.

## Description

### Technical Field

The present invention relates to a wireless communication system in which, for example, a large number of wireless communication terminals are connected to a plurality of wireless relay apparatus to perform communication, and a management apparatus therefor.

### Background Art

In recent years, a management approach using wireless communication has been becoming widespread in the fields of, for example, an electronic shelf label system, an inventory management system used in a warehouse or the like, and customer management for services in a train station, a theme park, and the like. In addition, in the future, as a wireless terminal included in a management target comes to have higher functionality, an application range thereof is expected to expand. Such a wireless communication network is generally configured by wireless terminals, a management apparatus for managing the entire system, and relay apparatus connected to the management apparatus for transmitting/receiving information to/from the wireless terminals (for example, see Patent Document 1 and Patent Document 2). Further, as a method of assigning each wireless terminal to a relay terminal, a method of selecting a relay apparatus having the largest received signal strength is frequently used. The received signal strength indicates the strength of a radio wave in communication between the wireless terminal and the relay apparatus.
Patent Document 1: JP 2007-215707 A
Patent Document 2: JP 2006-333335 A

### Disclosure of the Invention

### Problem to be solved by the Invention

However, in a case where the wireless communication terminal is connected to the wireless relay apparatus based only on the received signal strength as described above, wireless communication terminals are concentratedly assigned to a wireless relay apparatus, and the wireless relay apparatus having a large number of wireless communication terminals connected thereto becomes a bottleneck in the entire system. Consequently, there arises a problem that communication of high efficiency is impossible to perform in terms of a communication time, such as taking too much time for communication to the wireless communication terminal.

In order to solve the above-mentioned problem, the present invention has been made, and therefore has an object to provide a wireless communication system and a management apparatus, which are capable of performing, in the wireless communication system in which a plurality of wireless communication terminals are connected to a plurality of wireless relay apparatus, communication of high efficiency by changing the wireless relay apparatus which serve as the connection destination of the wireless communication terminal.

### Means for solving the Problem

In order to solve the above-mentioned problem, a wireless communication system according to the present invention includes: a plurality of wireless relay apparatus; a management apparatus; and wireless communication terminals each connected to any one of the plurality of wireless relay apparatus, and is **characterized in that**: the management apparatus includes: a management information accumulating section for predetermining and storing connection condition information relating to a condition for selecting the wireless communication terminal which is to be connected to the any one of the plurality of wireless relay apparatus; a relay apparatus selecting section for selecting one of the plurality of wireless relay apparatus, to which the wireless communication terminal is to be connected next, based on connection state information indicating a connection state of the wireless communication terminal and the connection condition information, and generating change request information indicating that a connection destination of the wireless communication terminal is to be changed to the selected one of the plurality of wireless relay apparatus, the connection state information being contained in connection request information with which the wireless communication terminal makes a request for connection to one of the plurality of wireless relay apparatus; and a management apparatus communication section for transmitting the change request information to the wireless communication terminal via the any one of the plurality of wireless relay apparatus, which is connected to the wireless communication terminal; the any one of the plurality of wireless relay apparatus is connected to the management apparatus and the wireless communication terminal to transfer information; and the wireless communication terminal transmits the connection request information to the management apparatus via the one of the plurality of wireless relay apparatus, to which the wireless communication terminal is to be connected next, the connection request information indicating a request for connection to the one of the plurality of wireless relay apparatus, to which the wireless communication terminal is to be connected next, based on the change request information received from the any one of the plurality of wireless relay apparatus, to which the wireless communication terminal is connected.

The present invention is also **characterized in that**, in the invention described above: the connection state information contains information indicating an attribute previously allocated to the wireless communication terminal; the connection condition information contains, as a condition, information indicating an attribute previously allocated to the wireless communication terminal; and the relay apparatus selecting section of the management apparatus selects the one of the plurality of wireless relay apparatus, to which the wireless communication terminal is to be connected next, based on the information indicating the attribute previously allocated to the wireless communication terminal, which is contained in the connection state information, and the connection condition.

The present invention is also **characterized in that**, in the invention described above: the connection state information contains information indicating a received signal strength obtained at the wireless communication terminal with regard to a signal transmitted from the any one of the plurality of wireless relay apparatus; the connection condition information contains, as a condition, information indicating a received signal strength obtained at the wireless communication terminal with regard to a signal transmitted from the any one of the plurality of wireless relay apparatus; and the relay apparatus selecting section of the management apparatus selects the one of the plurality of wireless relay apparatus, to which the wireless communication terminal is to be connected next, based on the information indicating the received signal strength obtained at the wireless communication terminal, which is contained in the connection state information, and the connection condition information.

The present invention is also **characterized in that**, in the invention described above: the connection state information contains information indicating wireless quality obtained at the wireless communication terminal with regard to a signal transmitted from the any one of the plurality of wireless relay apparatus; the connection condition information contains, as a condition, information indicating wireless quality obtained at the wireless communication terminal with regard to a signal transmitted from the any one of the plurality of wireless relay apparatus; and the relay apparatus selecting section of the management apparatus selects the one of the plurality of wireless relay apparatus, to which the wireless communication terminal is to be connected next, based on the information indicating the wireless quality obtained at the wireless communication terminal, which is contained in the connection state information, and the connection condition information.

The present invention is also **characterized in that**, in the invention described above: the any one of the plurality of wireless relay apparatus determines, in a case where the connection request information is received from the wireless communication terminal, a direction of the wireless communication terminal, and adds, as the connection state information, information indicating the determined direction of the wireless communication terminal to the received connection request information, to thereby transmit the connection request information to the management apparatus; the connection condition information contains, as a condition, information indicating a direction of the wireless communication terminal; and the relay apparatus selecting section of the management apparatus selects the one of the plurality of wireless relay apparatus, to which the wireless communication terminal is to be connected next, based on the information indicating the direction of the wireless communication terminal, which is contained in the connection state information, and the connection condition information.

The present invention is also **characterized in that**, in the invention described above: the management apparatus includes the connection condition information which varies according to a state in which the wireless communication system is used; and the relay apparatus selecting section of the management apparatus extracts the connection condition information according to the state of the wireless communication system, and selects the one of the plurality of wireless relay apparatus, to which the wireless communication terminal is to be connected next, based on the extracted connection condition information and the connection condition information.

Further, a connection destination changing method according to the present invention is used for a wireless communication system including: a plurality of wireless relay apparatus; a management apparatus; and wireless communication terminals each connected to any one of the plurality of wireless relay apparatus, and includes: previously storing, by a management information accumulating section of the management apparatus, connection condition information relating to a condition for selecting the wireless communication terminal for each of the plurality of wireless relay apparatus; storing, by the management information accumulating section of the management apparatus, connection state information indicating a characteristic of the wireless communication terminal, which is contained in connection request information for making a request for connection to the any one of the plurality of wireless relay apparatus, the connection request information being transmitted from the wireless communication terminal via the any one of the plurality of wireless relay apparatus; reading, by a relay apparatus selecting section of the management apparatus, the connection condition information stored in the management information accumulating section and the connection state information, and selecting one of the plurality of wireless relay apparatus, to which the wireless communication terminal is to be connected next, based on the connection condition information; generating, by the relay apparatus selecting section of the management apparatus, change request information indicating that the connection is to be changed to the selected one of the plurality of wireless relay apparatus; transmitting, by a management apparatus communication section of the management apparatus, the change request information to the wireless communication terminal via the any one of the plurality of wireless relay apparatus, to which the wireless communication terminal is currently connected; and receiving, by the wireless communication terminal, the change request information from the management apparatus via the any one of the plurality of wireless relay apparatus, to which the wireless communication terminal is currently connected, and generating connection request information for making a request for next connection to transmit the connection request information to the management apparatus via the one of the plurality of wireless relay apparatus, for which the request for the next connection has been made.

Further, a management apparatus according to the present invention is used in a wireless communication system including: wireless communication terminals; wireless relay apparatus for relaying connection request information with which the wireless communication terminal makes a request for connection; and the management apparatus, and is characterized by including: a management information accumulating section for previously storing connection condition information relating to a condition for selecting the wireless communication terminal for each of the wireless relay apparatus; a relay apparatus selecting section for selecting one of the wireless relay apparatus, to which the wireless communication terminal is to be connected next, based on connection state information indicating a characteristic of the wireless communication terminal, which is contained in the connection request information with which the wireless communication terminal makes the request for the connection to a wireless relay apparatus via the wireless relay apparatus, and the connection condition information, and generating change request information indicating that a connection destination of the wireless communication terminal is to be changed to the selected one of the wireless relay apparatus; and a management apparatus communication section for transmitting the change request information to the wireless communication terminal via the wireless relay apparatus connected to the wireless communication terminal, and receiving the connection request information and connection completion information from the wireless communication terminal via the one of the wireless relay apparatus, to which the wireless communication terminal is to be connected next.

The present invention is also **characterized in that**, in the invention described above: the connection state information contains information indicating an attribute previously allocated to the wireless communication terminal; the connection condition information contains, as a condition, information indicating an attribute previously allocated to the wireless communication terminal; and the relay apparatus selecting section selects the one of the wireless relay apparatus, to which the wireless communication terminal is to be connected next, based further on the information indicating the attribute previously allocated to the wireless communication terminal, which is contained in the connection state information, and the connection condition information.

The present invention is also **characterized in that**, in the invention described above: the connection state information contains information indicating a received signal strength obtained at the wireless communication terminal with regard to a signal transmitted from the wireless relay apparatus; the connection condition information contains, as a condition, information indicating a received signal strength obtained at the wireless communication terminal with regard to a signal transmitted from the wireless relay apparatus; and the relay apparatus selecting section selects the one of the wireless relay apparatus, to which the wireless communication terminal is to be connected next, based further on the information indicating the received signal strength obtained at the wireless communication terminal with regard to the signal transmitted from the wireless relay apparatus, which is contained in the connection state information, and the connection condition information.

The present invention is also **characterized in that**, in the invention described above: the connection state information contains information indicating a direction of the wireless communication terminal, which is determined by the wireless relay apparatus; the connection condition information contains, as a condition, information indicating a direction of the wireless communication terminal, which is determined by the wireless relay apparatus; and the relay apparatus selecting section selects the one of the wireless relay apparatus, to which the wireless communication terminal is to be connected next, based further on the information indicating the direction of the wireless communication terminal, which is contained in the connection state information and determined by the wireless relay apparatus, and the connection condition information.

### Effects of the Invention

According to the present invention, the wireless communication system includes the plurality of wireless relay apparatus, the management apparatus, and the wireless communication terminals each connected to any one of the plurality of wireless relay apparatus. The wireless communication terminal of the wireless communication system having the above-mentioned configuration receives synchronization signal information transmitted from the wireless relay apparatus, and then transmits, to the management apparatus, the connection request information containing information on the wireless relay apparatus, which is acquired based on the received synchronization signal information, and information indicating the attribute of the wireless communication system. Further, at the time of transferring the connection request information received from the wireless communication terminal to the management apparatus, the wireless relay apparatus transfers the information indicating the direction of the wireless communication terminal with the wireless relay apparatus set as a reference to the management apparatus, along with the connection request information. The management apparatus receives, via the wireless relay apparatus, attribute information on the wireless communication terminal, the received signal strength of the wireless communication terminal, and the information indicating the direction of the wireless communication terminal. Further, the management apparatus stores the connection condition information relating to the condition for selecting the wireless relay apparatus to which the wireless communication terminal is to be connected, and, based on the received information and the stored connection condition information, in order to keep communication quality, such as the communication time of the wireless communication system, selects the wireless relay apparatus to which the wireless communication terminal is to be connected. With this configuration, based on the connection condition information, the wireless relay apparatus which serve as the connection destinations of the wireless communication terminals connected to the wireless relay apparatus having a large number of wireless communication terminals connected thereto are changed, which enables a load imposed on the wireless relay apparatus causing a bottleneck in the wireless communication system to be reduced, resulting in communication of high efficiency. Further, it becomes possible to make a change in accordance with the way of operation, such as reducing a load imposed on a specific wireless relay apparatus.

### Brief Description of the Drawings

[FIG. 1] A schematic block diagram illustrating a wireless communication system according to an embodiment of the present invention.
[FIG. 2] A diagram illustrating an example in which the embodiment of the present invention is applied to electronic shelf labels.
[FIG. 3] A schematic block diagram illustrating an inner configuration of a portion of the management apparatus 1 according to the embodiment of the present invention, the portion being relevant to assignment of a wireless communication terminal 3-p-q to a wireless relay apparatus 2-m.
[FIG. 4] A schematic block diagram illustrating an inner configuration of a portion of the wireless relay apparatus 2-m according to the embodiment of the present invention, the portion being relevant to connection assignment of the wireless communication terminal 3-p-q.
[FIG. 5] A schematic block diagram illustrating an inner configuration of a portion of the wireless communication terminal 3-p-q according to the embodiment of the present invention, the portion being relevant to the connection assignment of the wireless relay apparatus 2-m.
[FIG. 6] A diagram illustrating contents of terminal specific information of the wireless communication terminal 3-p-q according to the embodiment of the present invention.
[FIG. 7] A diagram illustrating relay apparatus related information which is extracted by a relay information extracting section 34-p-q according to the embodiment of the present invention.
[FIG. 8] A diagram illustrating relay apparatus management information, which is information stored in a relay information accumulating section 25-m of the wireless relay apparatus 2-m according to the embodiment of the present invention.
[FIG. 9] A diagram illustrating connection request relay information contained in connection request information to be transmitted by the wireless relay apparatus 2-m to the management apparatus 1 based on the connection request information received from the wireless communication terminal 3-p-q according to the embodiment of the present invention.
[FIG. 10] A diagram illustrating management apparatus management information stored in a management information accumulating section 14 of the management apparatus 1 according to the embodiment of the present invention.
[FIG. 11] A diagram illustrating a flow chart of an operation of the wireless communication terminal 3-p-q when the wireless communication terminal 3-p-q connects to the wireless communication system 100 according to the embodiment of the present invention.
[FIG. 12] A diagram illustrating a flow chart of an operation of the wireless relay apparatus 2-m when the wireless communication terminal 3-p-q connects to the wireless communication system 100 according to the embodiment of the present invention.
[FIG. 13] A diagram illustrating a flow chart of an operation of the management apparatus 1 when the wireless communication terminal 3-p-q connects to the wireless communication system 100 according to the embodiment of the present invention.
[FIG. 14] A diagram illustrating a sequence of the wireless communication system 100 when the wireless communication terminal 3-p-q connects to the wireless communication system 100 according to the embodiment of the present invention.
[FIG. 15] A diagram illustrating a flow chart of an operation of the wireless communication terminal 3-p-q when the management apparatus 1 changes a wireless relay apparatus 2-b to which the wireless communication terminal 3-p-q is connected to a wireless relay apparatus 2-c according to the embodiment of the present invention.
[FIG. 16] A diagram illustrating a flow chart of operations of a wireless relay apparatus 2-b and the wireless relay apparatus 2-c when the management apparatus 1 changes a connection destination of the wireless communication terminal 3-p-q from the wireless relay apparatus 2-b to the wireless relay apparatus 2-c according to the embodiment of the present invention.
[FIG. 17] A diagram illustrating a flow chart of an operation of the management apparatus 1 when the connection destination of the wireless communication terminal 3-p-q is changed based on change request information according to the embodiment of the present invention.
[FIG. 18] A sequence diagram of the wireless communication system 100 when the connection destination of the wireless communication terminal 3-p-q is changed from the wireless relay apparatus 2-b to the wireless relay apparatus 2-c according to the embodiment of the present invention.
[FIG. 19] A diagram illustrating a setting example 1 of operation mode information, which is condition information used for changing assignment of the wireless relay apparatus 2-m, according to the embodiment of the present invention.
[FIG. 20] A diagram illustrating a setting example 2 of the operation mode information, which is the condition information used for changing the assignment of the wireless relay apparatus 2-m, according to the embodiment of the present invention.
[FIG. 21] A diagram illustrating a setting example 3 of the operation mode information, which is the condition information used for changing the assignment of the wireless relay apparatus 2-m, according to the embodiment of the present invention.
[FIG. 22] A diagram illustrating a setting example 4 of the operation mode information, which is the condition information used for changing the assignment of the wireless relay apparatus 2-m, according to the embodiment of the present invention.

### Description of Symbols

- 100: wireless communication system
- 1: management apparatus
- 2-m: wireless relay apparatus
- 3-p-q: wireless communication terminal

### Best Mode for carrying out the Invention

Hereinafter, description is given of a wireless communication system according to an embodiment of the present invention with reference to the drawings.

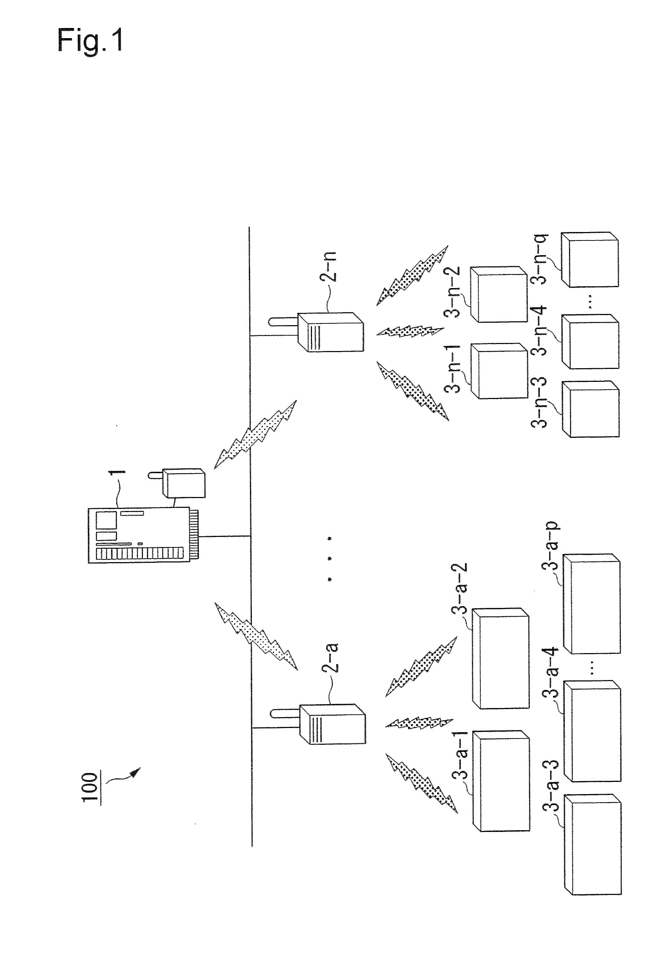

FIG. 1 is a schematic block diagram illustrating a wireless communication system 100 according to this embodiment. The wireless communication system 100 includes a plurality of wireless relay apparatus 2-a, ···, 2-n, and a plurality of wireless communication terminals 3-a-1, ···, 3-a-p (p=1, 2, ···) and wireless communication terminals 3-n-1, ···, 3-n-q (q=1, 2, ···).

The wireless relay apparatus 2-a, ···, 2-n have the same configuration, and are referred to as wireless relay apparatus 2-m when mentioned without any specification. Further, the wireless communication terminals 3-a-1, ···, 3-a-p (p=1, 2, ···) and the wireless communication terminals 3-n-1, ···, 3-n-q (q=1, 2, ···) have the same configuration, and are referred to as wireless communication terminal 3-p-q when mentioned without any specification. Further, the wireless relay apparatus 2-m and the wireless communication terminal 3-p-q perform communication via a wireless line. Further, a management apparatus 1 and the wireless relay apparatus 2-m perform communication via a wired line or a wireless line. For example, as the wired line, a local area network (LAN) or the like is used, whereas, as the wireless line, a communication system compliant with the IEEE (The Institute of Electrical and Electronics Engineers, Inc.) 802.11 standard, the IEEE 802.15.4 standard, or the like is used.

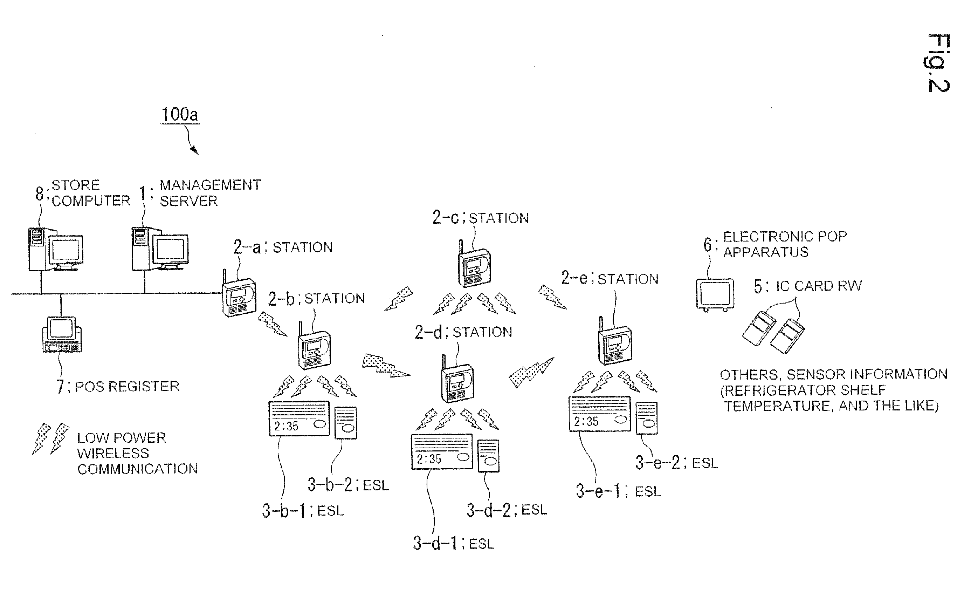

FIG. 2 is a diagram illustrating an example in which the wireless communication system 100 is applied to an electronic shelf label system. In the electronic shelf label system, a wireless communication system, a store computer 8, a POS register, an IC card reader/writer (RW), an electronic POP apparatus, and the like are connected to one another. The wireless communication system includes a management server 1 serving as the management apparatus, stations 2-a, 2-b, ···, and 2-e serving as the wireless relay apparatus, and electronic shelf labels 3-b-1, 3-b-2, ···, and 3-e-2 serving as the wireless communication terminals.

Hereinafter, with reference to the drawings, description is given of the example in which the wireless communication system according to the present invention is applied to the electronic shelf labels illustrated in FIG. 2.

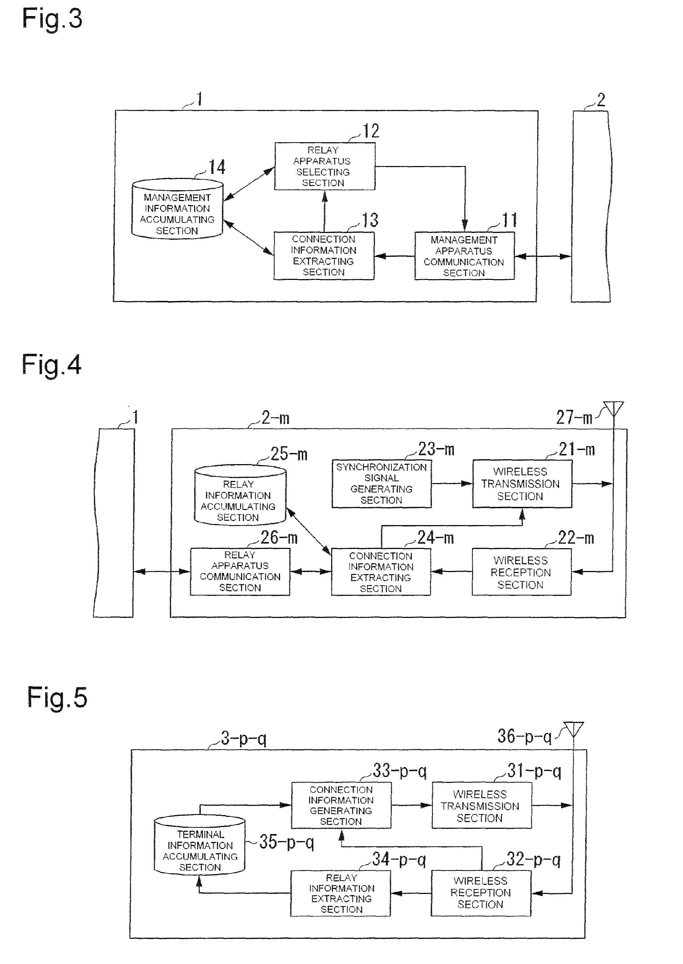

FIG. 3 is a schematic block diagram of the management apparatus 1. The management apparatus 1 includes a management apparatus communication section 11, a relay apparatus selecting section 12, a connection information extracting section 13, and a management information accumulating section 14.

The management apparatus communication section 11 receives, via the wireless relay apparatus 2-m, connection request information with which the wireless communication terminal 3-p-q makes a request for connection to the wireless communication system 100, and connection completion information indicating that the wireless communication terminal 3-p-q has connected to the wireless communication system 100. Further, the management apparatus communication section 11 transmits, to the wireless relay apparatus 2-m, connection permission information for permitting the wireless communication terminal 3-p-q to connect to the wireless communication system 100, and change request information for changing the wireless relay apparatus 2-m to which the wireless communication terminal 3-p-q is connected.

The relay apparatus selecting section 12 reads, from the management information accumulating section 14, connection condition information on the wireless relay apparatus 2-m, which is set based on operation mode information contained in management apparatus management information, and then judges whether or not the wireless communication terminal 3-p-q satisfies the connection condition information. Further, the relay apparatus selecting section 12 assigns the wireless relay apparatus 2-m to the wireless communication terminal 3-p-q based on a judgment result, generates change request information indicating that the connection of the wireless communication terminal 3-p-q to the wireless relay apparatus 2-m is to be changed, and outputs the change request information to the management apparatus communication section 11. Further, in a case where the wireless communication terminal 3-p-q which has transmitted the connection request to the system is not connected to the wireless relay apparatus 2-m, the relay apparatus selecting section 12 outputs, to the management apparatus communication section 11, the connection permission information for permitting the wireless communication terminal 3-p-q to connect to the wireless relay apparatus 2-m which has relayed the connection request information.

The connection information extracting section 13 extracts the connection request information from information input from the management apparatus communication section 11, and then records the connection request information in the management information accumulating section 14. Further, the connection information extracting section 13 outputs information indicating that the connection request information has been received to the relay apparatus selecting section 12. The management information accumulating section 14 stores the management apparatus management information, which is information regarding the connection of the wireless communication terminal 3-p-q.

FIG. 4 is a schematic block diagram of the wireless relay apparatus 2-m. The wireless relay apparatus 2-m includes a wireless transmission section 21-m, a wireless reception section 22-m, a synchronization signal generating section 23-m, a connection information extracting section 24-m, a relay information accumulating section 25-m, a relay apparatus communication section 26-m, and an antenna 27-m.

The wireless transmission section 21-m transmits information to the wireless communication terminal 3-p-q via the antenna 27-m. Further, synchronization signal information is input to the wireless transmission section 21-m from the synchronization signal generating section 23-m. Further, the connection permission information and the change request information are input to the wireless transmission section 21-m from the connection information extracting section 13. The wireless reception section 22-m receives, via the antenna 27-m, information transmitted from the wireless communication terminal 3-p-q, and then determines a direction of the wireless communication terminal 3-p-q which has sent the received information. Further, the wireless reception section 22-m outputs the received information to the connection information extracting section 24-m.

The synchronization signal generating section 23-m generates the synchronization signal information for achieving synchronization with the wireless communication terminal 3-p-q at predetermined time intervals, and then outputs the generated information to the wireless transmission section 21-m. It should be noted that the synchronization signal information transmitted from the wireless transmission section 21-m is information for allowing the respective wireless relay apparatus 2-m to synchronize with the wireless communication terminals 3-p-q at different timings. The wireless communication terminal 3-p-q receives the synchronization signal information, which enables the wireless communication terminal 3-p-q to identify the wireless relay apparatus 2-m based on a network ID and a channel contained in the synchronization signal information, and a timing at which the wireless relay apparatus transmits the synchronization signal information.

The connection information extracting section 24-m extracts the connection request information indicating a terminal connection request of the wireless communication terminal 3-p-q, which is contained in the information received from the wireless reception section 22-m. Further, the connection information extracting section 24-m records the extracted connection request information in the relay information accumulating section 25-m. Further, the connection information extracting section 24-m outputs the extracted connection request information to the relay apparatus communication section 26-m.

The relay information accumulating section 25-m stores relay apparatus management information. The relay apparatus communication section 26-m transmits, to the management apparatus 1, information which is obtained by adding connection request relay information to the connection request information input from the connection information extracting section 24-m. The antenna 27-m is configured by, for example, an array antenna, a parabola antenna, a Yagi antenna, or the like, which is capable of determining the direction of the wireless communication terminal 3-p-q, and performs wireless communication of information with the wireless communication terminal 3-p-q.

FIG. 5 is a schematic block diagram of the wireless communication terminal 3-p-q. The wireless communication terminal 3-p-q includes a wireless transmission section 31-p-q, a wireless reception section 32-p-q, a connection information generating section 33-p-q, a relay information extracting section 34-p-q, a terminal information accumulating section 35-p-q, and an antenna 36-p-q.

The wireless transmission section 31-p-q transmits information to the wireless relay apparatus 2-m via the antenna 36-p-q. The wireless reception section 32-p-q receives, via the antenna 36-p-q, the information transmitted from the wireless relay apparatus 2-m.

Connection change information is input to the connection information generating section 33-p-q from the wireless reception section 32-p-q. Further, the connection information generating section 33-p-q reads terminal specific information and relay apparatus related information from the terminal information accumulating section 35-p-q. Further, the connection information generating section 33-p-q generates the connection request information to output the connection request information to the wireless transmission section 31-p-q.

Information received by the wireless reception section 32-p-q is input to the relay information extracting section 34-p-q, and the relay information extracting section 34-p-q extracts the relay apparatus related information from the input information, and then records the relay apparatus related information in the terminal information accumulating section 35-p-q. The terminal information accumulating section 35-p-q stores the terminal specific information and the relay apparatus related information. Here, the terminal specific information is, for example, information stored when the wireless communication terminal 3-p-q is manufactured.

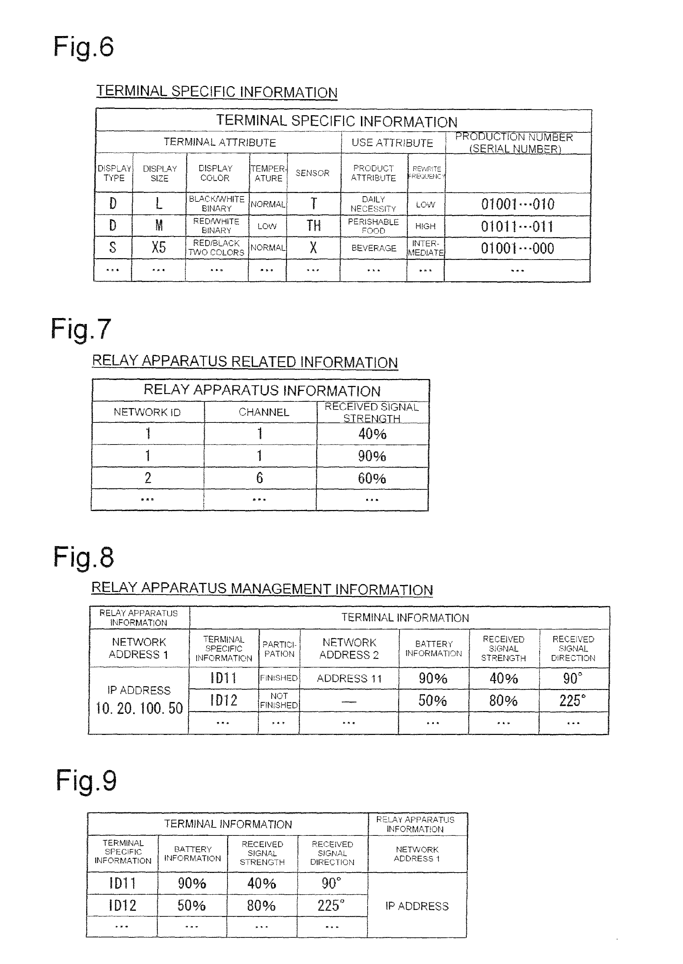

FIG. 6 is a diagram illustrating contents of the terminal specific information which is included in the wireless communication terminal 3-p-q to be used as the electronic shelf label. The terminal specific information is information contained in connection state information, and contains "terminal attribute information", "use attribute information", and "production number".

The terminal attribute information contains information of "display type", "display size", "display color", "temperature", and "sensor". The "display type" is information indicating a display type of the display screen of the wireless communication terminal 3-p-q, and is, for example, information indicating a dot matrix type (D), a segment type (S), or the like. The "display size" is information indicating a size of the display screen, and is, for example, information indicating 480x480 dots (L), 240x82 dots (M), 120x82 dots (S), 5-digit segment type (x5), or the like. The "display color" is information indicating a display color of the display screen, and is, for example, information indicating that the display color is a binary of black and white (black/white binary), that the display color is a binary of red and white (red/white binary), that the display color is black and white in addition to red in part (red/black binary), or the like. The "temperature" is information indicating an operating temperature range of the wireless communication terminal 3-p-q, and is information indicating that the wireless communication terminal 3-p-q is for use in a store and a refrigerator (normal temperature), or that the wireless communication terminal 3-p-q is for use in a freezer (low temperature). The "sensor" is information relating to whether or not the wireless communication terminal 3-p-q is provided with a sensor for temperature or humidity, and is, for example, information indicating that the wireless communication terminal 3-p-q is equipped with a temperature sensor (T), or that the wireless communication terminal 3-p-q is equipped with a temperature sensor and a humidity sensor (TH).

The use attribute information contains "product attribute" and "rewrite frequency". The "product attribute" is information indicating a product corresponding to the wireless communication terminal 3-p-q serving as the electronic shelf label, and is information indicating a daily necessity, a perishable food, a beverage, or the like. The "rewrite frequency" is information indicating the frequency of communication performed for changing information to be displayed on the display screen of the wireless communication terminal 3-p-q serving as the electronic shelf label, and is information indicating that the frequency is less than once a week (low), that the frequency is once or more in a week and less than once a day (intermediate), or that the frequency is once or more in a day (high). The "production number" is information for identifying the wireless communication terminal 3-p-q, and is, for example, a number to be allocated to the wireless communication terminal 3-p-q at the time of manufacture.

FIG. 7 is a diagram illustrating the relay apparatus related information which is extracted from the synchronization signal information by the relay information extracting section 34-p-q. The relay apparatus related information contains "network ID", "channel", and "received signal strength". FIG. 7 illustrates an example of a case in which the wireless communication terminal 3-p-q receives the synchronization signal information from a plurality of relay apparatus.

The "network ID" is information for identifying a network to which the wireless relay apparatus 2-m belongs, and is contained in the synchronization signal information transmitted from the wireless relay apparatus 2-m. The "channel" is information indicating a frequency channel of the wireless relay apparatus 2-m. The "received signal strength" is information indicating the strength of a signal received by the wireless communication terminal 3-p-q (received signal strength: RSS), and is information contained in the connection state information. For example, the received signal strength is indicated as 100% when the wireless reception section 32-p-q is in a saturation state, and thus further amplification is impossible.

Further, FIG. 8 is a diagram illustrating the relay apparatus management information, which is information stored in the relay information accumulating section 25-m of the wireless relay apparatus 2-m. The relay apparatus management information contains "network address 1" as relay apparatus information, and "terminal specific information", "participation", "network address 2", "battery information", "received signal strength", and "received signal direction" as terminal information.

The "network address 1" is information for identifying the wireless relay apparatus 2-m, and, for example, an Internet Protocol (IP) address or the like is used. The "terminal specific information" is the same information as the terminal specific information of the wireless communication terminal 3-p-q which is illustrated in FIG. 6, and is information on the wireless communication terminal 3-p-q connected to the wireless relay apparatus 2-m. Further, the terminal specific information of the wireless communication terminal 3-p-q is recorded for each wireless communication terminal in an identifiable manner, such as ID11, or ID12.

The "participation" is information indicating whether or not the wireless communication terminal 3-p-q is connected to the wireless communication system 100 via the corresponding wireless relay apparatus 2-m. "Finished" indicates a state in which the wireless communication terminal 3-p-q has completed connecting to the wireless communication system. Further, "not finished" indicates a state in which the wireless communication terminal 3-p-q has made a request for connection to the wireless communication system, but the connection is being established and has not been completed.

The "network address 2" is information to be allocated by the management apparatus 1 after the wireless communication terminal 3-p-q has connected to the wireless communication system 100. The "battery information" is information indicating a voltage of a battery provided to the wireless communication terminal 3-p-q, and is information indicating a voltage at a current time when a voltage of full charge is indicated as 100%. The "received signal strength" is information indicating the strength of a signal received by the wireless communication terminal 3-p-q. For example, the received signal strength is indicated as 100% when the reception section is in the saturation state, and thus further amplification is impossible. The "received signal direction" is information indicating a direction in which the corresponding wireless communication terminal 3-p-q is located when a direction predetermined by the wireless relay apparatus 2-m is used as a reference.

FIG. 9 is a diagram illustrating the connection request relay information which is added by the wireless relay apparatus 2-m to the connection request information to be transmitted to the management apparatus 1 based on the connection request information received from the wireless communication terminal 3-p-q. The connection request relay information contains "terminal specific information", "battery information", "received signal strength", and "received signal direction" as information on the wireless communication terminal 3-p-q, and "network address 1" as information on the wireless relay apparatus 2-m.

The "terminal specific information" is the same information as the terminal specific information of the wireless communication terminal 3-p-q which is illustrated in FIG. 6, and is information on the wireless communication terminal 3-p-q connected to the wireless relay apparatus 2-m. The terminal specific information of the wireless communication terminal 3-p-q is identified as ID11, ID12, or the like. The "battery information" is information indicating the voltage of the battery provided to the wireless communication terminal 3-p-q, and is information indicating the voltage at the current time when the voltage of full charge is indicated as 100%. The "received signal strength" is information indicating the strength of a signal received by the wireless communication terminal 3-p-q. The "received signal direction" is information indicating the direction in which the corresponding wireless communication terminal 3-p-q is located when the direction predetermined by the wireless relay apparatus 2-m is used as the reference. The "network address 1" is information for identifying the wireless relay apparatus 2-m to be assigned by the management apparatus 1.

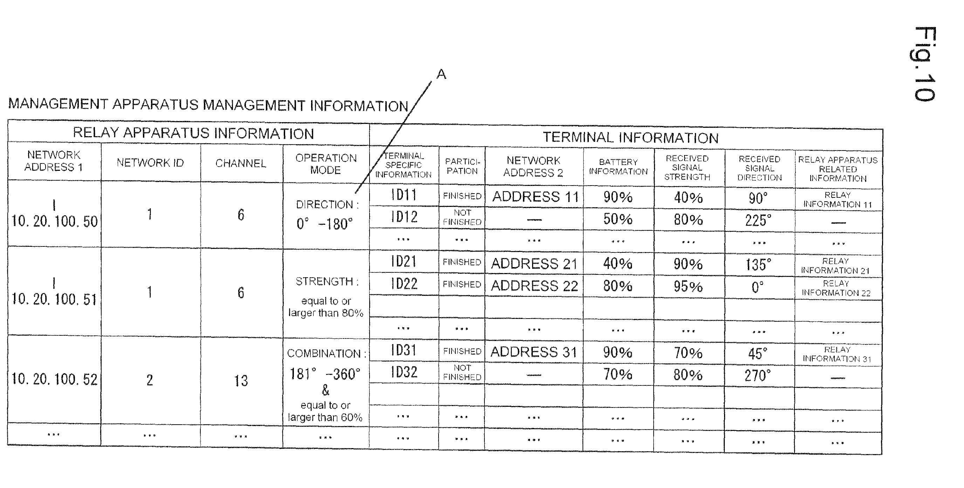

FIG. 10 is a diagram illustrating the management apparatus management information stored in the management information accumulating section 14 of the management apparatus 1. The management apparatus management information contains "network address 1", "network ID", "channel", and "operation mode" as information on the wireless relay apparatus 2-m, and "terminal specific information", "participation", "network address 2", "battery information", "received signal strength", "received signal direction", and "relay apparatus related information" as information on the wireless communication terminal 3-p-q.

The management apparatus management information contains, for each wireless relay apparatus 2-m, information on the wireless communication terminal 3-p-q connected to the corresponding wireless relay apparatus 2-m and on the wireless communication terminal 3-p-q for which the connection to the corresponding wireless relay apparatus 2-m is being established. In other words, the management apparatus management information contains information indicating via which wireless relay apparatus 2-m each wireless communication terminal 3-p-q is connected to the wireless communication system.

The "network address 1" is information for identifying the wireless relay apparatus 2-m in the wireless communication system 100. The "network ID" is information for identifying a network included in the wireless communication system 100. The "channel" is information indicating a channel to be used when wireless communication is performed between the wireless relay apparatus 2-m and the wireless communication terminal 3-p-q in the network indicated by the network ID.

The "operation mode" is the connection condition information, and indicates a condition for selecting, when the connection change is performed between the wireless relay apparatus 2-m and the wireless communication terminal 3-p-q, a wireless communication terminal 3-p-q to be connected to the wireless relay apparatus 2-m. In order to maintain communication quality of the wireless relay apparatus 2-m, the operation mode contains "direction condition information", "strength condition information", "attribute condition information", "use condition information", and "number of terminals for connection". It should be noted that the operation mode is determined according to the state of the wireless communication system 100, and details thereof are described later.

The "direction condition information" is information contained in the connection state information, and is information for making a judgment as to the direction in which the corresponding wireless communication terminal 3-p-q is located based on received signal direction information, which is information indicating the direction of the wireless communication terminal. For example, a symbol A of FIG. 10 is information indicating a condition which requires a wireless communication terminal 3-p-q existing in a direction range of from 0° to 180° with the northerly direction from the wireless relay apparatus 2-m set as 0°. The "strength condition information" relates to a judgment condition based on received signal strength information indicating the strength of the signal received from the wireless relay apparatus 2-m by the wireless communication terminal 3-p-q. The "attribute condition information" relates to a judgment condition based on terminal attribute information stored in each wireless communication terminal 3-p-q. The "use condition information" relates to a judgment condition based on use attribute information stored in each wireless communication terminal 3-p-q. The "number of terminals for connection" is information indicating an upper limit for the number of wireless communication terminals 3-p-q to be connected to the wireless relay apparatus 2-m.

The "terminal specific information" is the same information as the terminal specific information of the wireless communication terminal 3-p-q which is illustrated in FIG. 6, and is information on the wireless communication terminal 3-p-q connected to the wireless relay apparatus 2-m. Further, the terminal specific information of the wireless communication terminal 3-p-q is identified as ID11, ID12, or the like. The "participation" is information indicating that the wireless communication terminal 3-p-q is in a connected state to the wireless communication system 100 via the corresponding wireless relay apparatus 2-m. The "network address 2" is information to be allocated by the management apparatus 1 after the wireless communication terminal 3-p-q has connected to the wireless communication system 100. The "battery information" is information indicating the voltage of the battery provided to the wireless communication terminal 3-p-q. The "received signal strength" is information indicating the strength of a signal received by the wireless communication terminal 3-p-q. The "received signal direction" is information indicating the direction in which the corresponding wireless communication terminal 3-p-q is located when the direction predetermined by the wireless relay apparatus 2-m is used as the reference. The "relay apparatus related information" is, as illustrated in FIG. 7, information obtained from the synchronization signal information transmitted from the wireless relay apparatus 2-m when the wireless communication terminal 3-p-q connects to the wireless communication system 100.

The "terminal specific information" is the same information as the terminal specific information of the wireless communication terminal 3-p-q which is illustrated in FIG. 6, and is information on the wireless communication terminal 3-p-q connected to the wireless relay apparatus 2-m. Further, the terminal specific information of the wireless communication terminal 3-p-q is identified as ID11, ID12, or the like. The "participation" is information indicating whether or not the wireless communication terminal 3-p-q is in the connected state to the wireless communication system 100. The "network address 2" is information which is to serve as an identifier of the wireless communication terminal 3-p-q in the wireless communication system 100. The "battery information" is information indicating the voltage of the battery provided to the wireless communication terminal 3-p-q. The "received signal strength" is information indicating the strength of a signal received by the wireless communication terminal 3-p-q. The "received signal direction" is information indicating the direction in which the corresponding wireless communication terminal 3-p-q is located when the direction predetermined by the wireless relay apparatus 2-m is used as the reference. The "relay apparatus related information" is the information illustrated in FIG. 7 ("network ID", "channel", and "received signal strength" extracted from the synchronization signal information received by the wireless communication terminal 3-p-q), and is received from each wireless communication terminal 3-p-q. The relay apparatus related information is identified as relay information 11, relay information 21, or the like for each wireless communication terminal 3-p-q associated with the corresponding information.

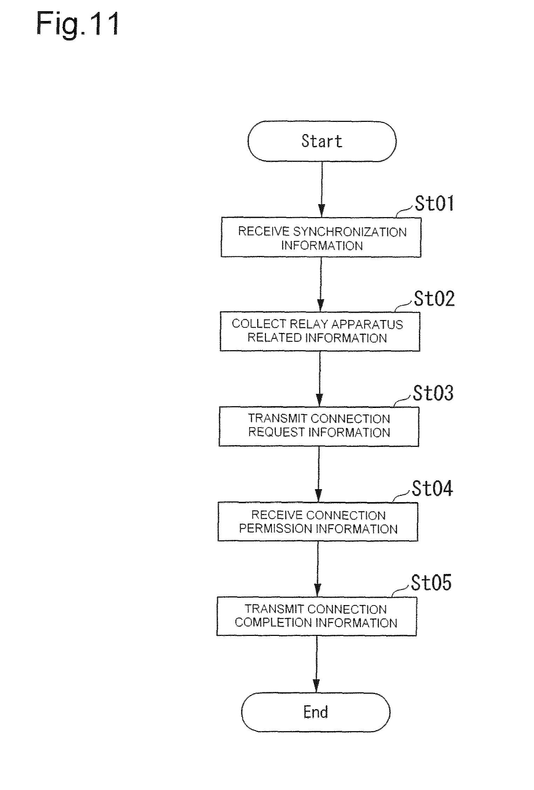

Next, with reference to FIG. 11 to FIG. 13, description is given of the respective operations of the wireless communication terminal 3-p-q, the wireless relay apparatus 2-m, and the management apparatus 1 when the wireless communication terminal 3-p-q connects to the wireless communication system 100.

FIG. 11 is a diagram illustrating a flow chart of the operation of the wireless communication terminal 3-p-q when the wireless communication terminal 3-p-q connects to the wireless communication system 100.

When power is supplied or when connection is reestablished through an external operation, the wireless communication terminal 3-p-q performs the following operation. First, the wireless reception section 32-p-q of the wireless communication terminal 3-p-q receives the synchronization signal information transmitted from the wireless relay apparatus 2-m at fixed intervals (Step St01), and then determines the received signal strength. Subsequently, the wireless reception section 32-p-q outputs the received synchronization signal information and the determined received signal strength information to the relay information extracting section 34-p-q. The relay information extracting section 34-p-q extracts the network ID and the channel from the input synchronization signal information, and then records the extracted network ID, the extracted channel, and the received signal strength in the terminal information accumulating section 35-p-q. The wireless reception section 32-p-q continues to receive the synchronization signal information for a given period of time, and outputs the received synchronization signal information to the relay information extracting section 34-p-q. The relay information extracting section 34-p-q extracts the relay apparatus related information containing the network ID, the channel, and the received signal strength from the input synchronization signal information, and then records the extracted relay apparatus related information in the terminal information accumulating section 35-p-q (Step St02).

After the wireless reception section 32-p-q finishes receiving the available synchronization signal information, the wireless reception section 32-p-q outputs information indicating that the operation is finished to the connection information generating section 33-p-q. The connection information generating section 33-p-q reads the relay apparatus related information stored in the terminal information accumulating section 35-p-q, generates the connection request information containing information for making a request for connection to the wireless relay apparatus 2-m having the network ID contained in the synchronization signal information received first, the relay apparatus related information, and the terminal specific information of the corresponding wireless communication terminal 3-p-q, and outputs the connection request information to the wireless transmission section 31-p-q. The wireless transmission section 31-p-q outputs the input connection request information to the wireless relay apparatus 2-m (Step St03).

The wireless reception section 32-p-q receives the connection permission information as a response to the connection request information from the wireless relay apparatus 2-m (Step St04). The wireless reception section 32-p-q outputs the received connection permission information to the connection information generating section 33-p-q. The relay information extracting section 34-p-q extracts the assigned network address 2 from the connection permission information, and then outputs the network address 2 to the wireless transmission section 31-p-q and the wireless reception section 32-p-q. From that time forward, the wireless transmission section 31-p-q and the wireless reception section 32-p-q perform communication by using the network address 2 as the own address. The connection information generating section 33-p-q generates the connection completion information based on the input connection permission information, and then transmits the connection completion information to the wireless relay apparatus 2-m via the wireless transmission section 31-p-q (Step St05).

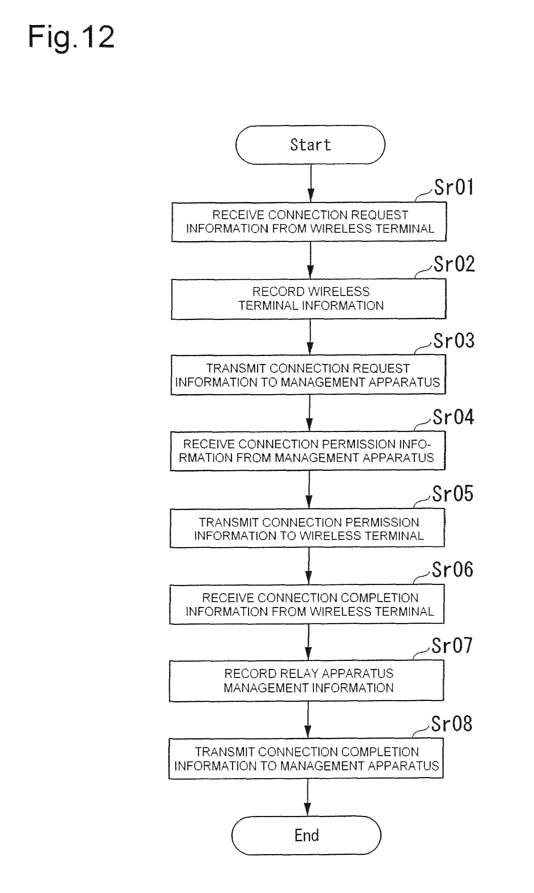

Next, FIG. 12 is a diagram illustrating a flow chart of the operation of the wireless relay apparatus 2-m when the wireless communication terminal 3-p-q connects to the wireless communication system 100.

The wireless reception section 22-m of the wireless relay apparatus 2-m receives the connection request information from the wireless communication terminal 3-p-q (Step Sr01), and then determines the direction of the wireless communication terminal 3-p-q which has transmitted the connection request information. The wireless reception section 22-m outputs the received connection request information and the determined received signal direction information to the connection information extracting section 24-m. The connection information extracting section 24-m records the input connection request information and received signal direction information in the relay information accumulating section 25-m (Step Sr02). The connection information extracting section 24-m generates information indicating a connection request containing the connection request relay information obtained by adding, to the input connection request information, the network address 1 of that wireless relay apparatus 2-m and the received signal direction information of the wireless communication terminal 3-p-q which has transmitted the connection request information. Further, the connection information extracting section 24-m outputs the generated information to the relay apparatus communication section 26-m. The relay apparatus communication section 26-m transmits the input information to the management apparatus 1 (Step Sr03).

The relay apparatus communication section 26-m receives, as a response to the connection request information, the connection permission information transmitted from the management apparatus 1 (Step Sr04), and then outputs the received connection permission information to the connection information extracting section 24-m. The connection information extracting section 24-m transmits the input connection permission information to the wireless communication terminal 3-p-q via the wireless transmission section 21-m (Step Sr05). The wireless reception section 22-m receives the connection completion information from the wireless communication terminal 3-p-q (Step Sr06), and then outputs the connection completion information to the connection information extracting section 24-m. Based on the input connection completion information, the connection information extracting section 24-m records the recorded information indicating the participation and the network address 2 of the wireless communication terminal 3-p-q in the relay information accumulating section 25-m (Step Sr07). Subsequently, the connection information extracting section 24-m transmits the connection completion information to the management apparatus 1 via the relay apparatus communication section 26-m (Step Sr08).

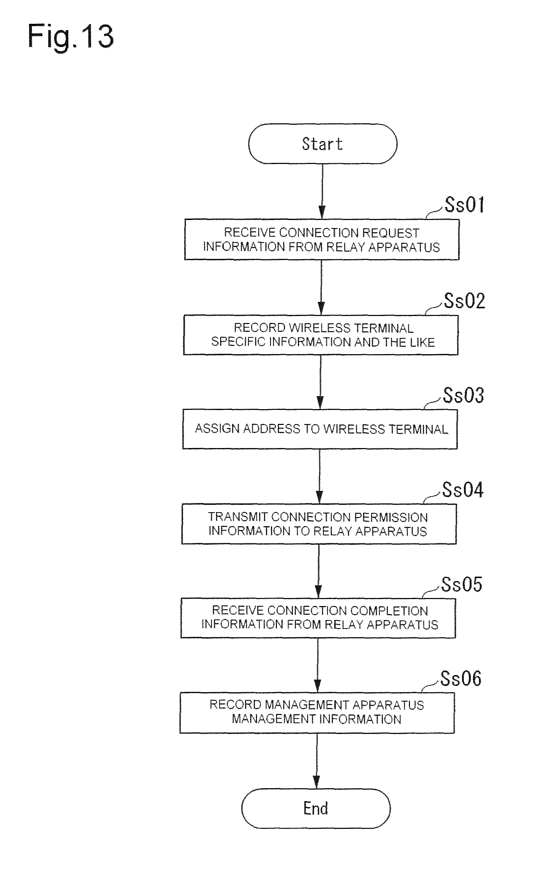

Next, FIG. 13 is a diagram illustrating a flow chart of the operation of the management apparatus 1 when the wireless communication terminal 3-p-q connects to the wireless communication system 100.

The management apparatus communication section 11 receives the connection request relay information from the wireless relay apparatus 2-m (Step Ss01). The management apparatus communication section 11 outputs the received connection request relay information to the connection information extracting section 13. The connection information extracting section 13 extracts the relay apparatus related information, the terminal specific information, and the like from the input connection request relay information, and then records the extracted information pieces in the management information accumulating section 14 (Step Ss02). The connection information extracting section 13 outputs information indicating that the connection request relay information has been received to the relay apparatus selecting section 12. The relay apparatus selecting section 12 assigns the network address 2 for identification in the wireless communication system 100 to the wireless communication terminal 3-p-q which has made the request for the connection (Step Ss03).

Based on the connection request, the relay apparatus selecting section 12 generates the connection permission information which contains the assigned network address 2 and gives permission for the connection to the wireless relay apparatus 2-m, and then outputs the connection permission information to the management apparatus communication section 11. The management apparatus communication section 11 transmits the input connection permission information to the wireless relay apparatus 2-m (Step Ss04). The management apparatus communication section 11 receives the connection completion information from the wireless relay apparatus 2-m (Step Ss05). The management apparatus communication section 11 outputs the received connection completion information to the connection information extracting section 13. Based on the input connection completion information, the connection information extracting section 13 records the information indicating the participation and the network address 2 of the wireless communication terminal 3-p-q (Step Ss06).

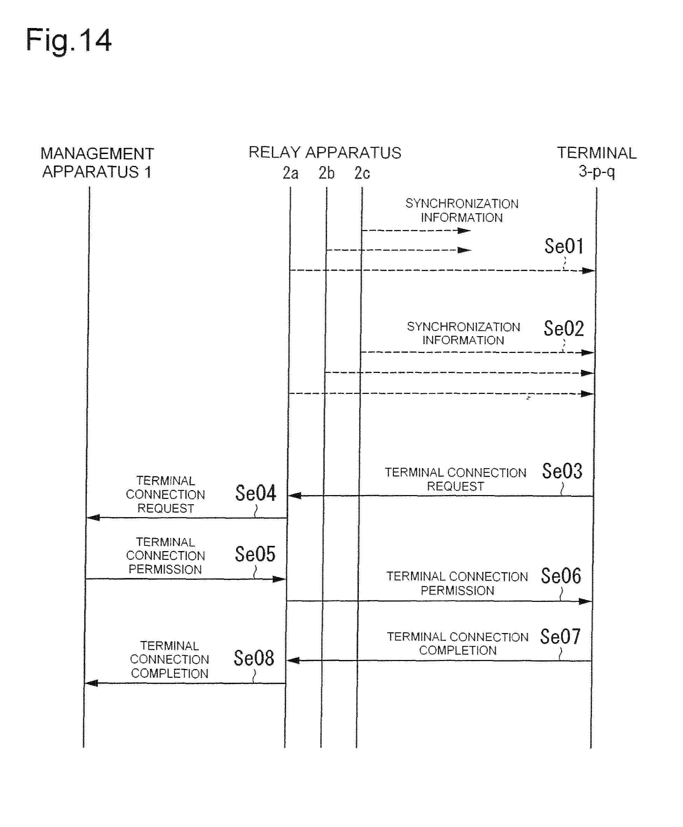

Next, FIG. 14 is a diagram illustrating a sequence of the wireless communication system 100 when the wireless communication terminal 3-p-q connects to the wireless communication system 100. It should be noted that the wireless communication terminal 3-p-q is assumed to be located at a position where the synchronization signal information is receivable from the wireless relay apparatus 2-a, the wireless relay apparatus 2-b, and the wireless relay apparatus 2-c. Further, it is assumed that power supply is started in a state in which the wireless communication terminal 3-p-q is not supplied with power, and that the wireless communication terminal 3-p-q has been reset through an external operation.

The wireless communication terminal 3-p-q receives the synchronization signal information. The wireless reception section 32-p-q of the wireless communication terminal 3-p-q receives the synchronization signal information from the wireless transmission section 21-a of the wireless relay apparatus 2-a. Further, the wireless reception section 32-p-q outputs the received synchronization signal information to the relay information extracting section 34-p-q. The relay information extracting section 34-p-q extracts the relay apparatus related information on the wireless relay apparatus 2-a from the synchronization signal information, and then records the relay apparatus related information in the terminal information accumulating section 35-p-q (Step Se01). The wireless reception section 32-p-q continues to receive the synchronization signal information, and receives the synchronization signal information from the wireless relay apparatus 2-b and the wireless relay apparatus 2-c. Further, the wireless reception section 32-p-q determines the received signal strength of the received synchronization signal information, and then outputs the determined received signal strength information to the relay information extracting section 34-p-q. The relay information extracting section 34-p-q records the relay apparatus related information on the wireless relay apparatus 2-b and the wireless relay apparatus 2-c in the terminal information accumulating section 35-p-q (Step Se02). The connection information generating section 33-p-q of the wireless communication terminal 3-p-q generates the connection request information for making a request for connection to, for example, the wireless relay apparatus 2-a from which the synchronization signal information has been received first, and then transmits the generated connection request information to the wireless relay apparatus 2-a via the wireless transmission section 31-p-q (Step Se03).

The wireless reception section 22-a of the wireless relay apparatus 2-a receives the connection request information, and then outputs the connection request information to the connection information extracting section 24-a. The connection information extracting section 24-a generates the connection request relay information based on the received connection request information, and then transmits the generated connection request relay information to the management apparatus 1 via the relay apparatus communication section 26-a (Step Se04). The management apparatus communication section 11 of the management apparatus 1 receives the connection request relay information, and then outputs the connection request relay information to the connection information extracting section 13. The relay apparatus selecting section 12 receives, from the connection information extracting section 13, the information indicating that the connection request relay information has been received, and then generates the connection permission information. The relay apparatus selecting section 12 transmits the generated connection permission information to the wireless relay apparatus 2-a via the management apparatus communication section 11 (Step Se05). The relay apparatus communication section 26-a of the wireless relay apparatus 2-a receives the connection permission information from the management apparatus 1, and then outputs the connection permission information to the connection information extracting section 24-a. The connection information extracting section 24-a transmits the received connection permission information to the wireless communication terminal 3-p-q via the wireless transmission section 21-a (Step Se06).

The wireless reception section 32-p-q of the wireless communication terminal 3-p-q receives the connection permission information, and then outputs the connection permission information to the connection information generating section 33-p-q. The connection information generating section 33-p-q sets the network address 2 contained in the connection permission information, and then generates the connection completion information. The connection information generating section 33-p-q outputs the generated connection completion information to the wireless relay apparatus 2-a via the wireless transmission section 31-p-q (Step Se07). The wireless reception section 22-a of the wireless relay apparatus 2-a receives the connection completion information, and then outputs the connection completion information to the connection information extracting section 24-a. Based on the input connection completion information, the connection information extracting section 24-a records the relay apparatus management information in the relay information accumulating section 25-a. Subsequently, the connection information extracting section 24-a outputs the input connection completion information to the management apparatus 1 via the relay apparatus communication section 26-a (Step Se08). The management apparatus communication section 11 of the management apparatus 1 receives the connection completion information from the wireless relay apparatus 2-a, and then outputs the received connection completion information to the connection information extracting section 13. Based on the connection completion information, the connection information extracting section 13 updates the management apparatus management information stored in the management information accumulating section 14. In this manner, through the sequence described above, the wireless communication terminal 3-p-q connects to the wireless communication system 100.

Incidentally, the connection condition information set based on the operation mode information (hereinafter, referred to as operation mode condition) is determined according to the state of the wireless communication system 100, and, in a storage device (not shown) of the management apparatus 1, the state and the connection condition information are stored in association with each other. Examples of the state of the wireless communication system 100 include, for example, states of system startup, normal operation, specific functioning, and abnormality.

As the operation mode condition at the system startup, for example, based on the data size of the wireless communication terminal 3-p-q from the terminal attribute information of the wireless communication terminal 3-p-q, a condition which shortens a communication processing time of the entire wireless communication system 100 may be used.

During the normal operation, the management apparatus 1 checks, at given timings or at the time of human operation or the like, whether or not a condition specifying communication performance to be achieved in the wireless communication system 100 (communication quality condition) is satisfied. Then, in a case where the wireless communication system 100 does not satisfy the communication quality condition, an improvement in communication time is made by changing the wireless relay apparatus 2-m to which the wireless communication terminal 3-p-q is connected. The communication quality condition relates to the communication processing time of the entire wireless communication system, the communication processing time of the wireless relay apparatus 2-m, a total number of wireless communication terminals 3-p-q to be connected to the wireless relay apparatus 2-m, or the like. For example, the communication quality condition is determined to indicate that "the communication processing time of the entire wireless communication system is three minutes or less". Accordingly, as the operation mode condition in the state of the normal operation, a condition which lightens the communication load imposed on the wireless relay apparatus 2-m may be used, such as a condition which specifies that, in the case where the wireless communication system 100 does not satisfy the communication quality condition, "the number of wireless communication terminals 3-p-q is equal to or less than a given value".

In the case where the wireless communication system 100 is used as the electronic shelf label system, the state of the specific functioning relates to, for example, a time when a limited-time offer is made in which a specific product is priced in a time-limited manner. In the case of the limited-time offer, it is necessary to transfer data to a wireless communication terminal 3-p-q serving as a specific electronic shelf label in a short period of time. In this case, the operation mode condition for the limited-time offer may be determined so that the communication processing time of the wireless communication terminal 3-p-q to be subjected to the limited-time offer becomes the shortest based on the terminal attribute information or the like. For example, a condition which allows the wireless communication terminal 3-p-q to connect to such a wireless relay apparatus 2-m that is stably available for communication may be used, such as a condition which specifies that "in the case of a wireless communication terminal 3-p-q having a specific terminal attribute, and the received signal strength is equal to or larger than 60%".

Further, the state of the abnormality relates to a time when the wireless relay apparatus 2-m fails or another similar case. In this case, for example, a condition which enables the wireless communication terminal 3-p-q to connect to another wireless relay apparatus 2-m than the failed wireless relay apparatus 2-m is determined as the operation mode condition.

Further, in changing a state in which the wireless communication system 100 is operated, for example, in the case of the electronic shelf label system, due to a change in store layout, there is a case where a system user specifies the wireless relay apparatus 2-m which is to serve as a connection destination of the wireless communication terminal 3-p-q.

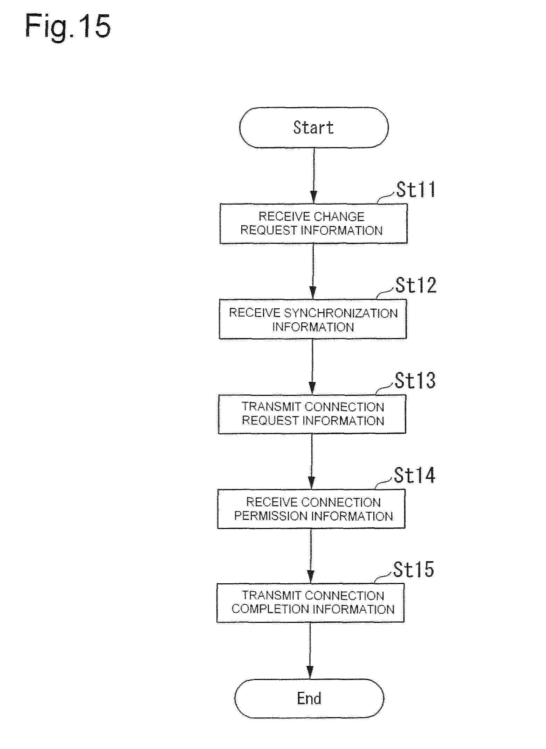

According to the state of the wireless communication system 100 and the operation mode condition, the management apparatus 1 determines the wireless relay apparatus 2-m to which the wireless communication terminal 3-p-q connected to the wireless communication system 100 is to be connected next. Then, through operation described below, the wireless relay apparatus 2-m to which the wireless communication terminal 3-p-q is connected is changed. Hereinafter, with reference to FIG. 15 to FIG. 17, description is given of operations of the management apparatus 1, the wireless relay apparatus 2-m, and the wireless communication terminal 3-p-q when the connection is changed from the wireless relay apparatus 2-b, to which the wireless communication terminal 3-p-q is connected, to the wireless relay apparatus 2-c. It should be noted that the description is given based on the operation in which the connection is changed from the wireless relay apparatus 2-b, to which the wireless communication terminal 3-p-q is connected, to the wireless relay apparatus 2-c. Further, the wireless relay apparatus 2-a, the wireless relay apparatus 2-b, and the wireless relay apparatus 2-c have the same configuration as the above-mentioned wireless relay apparatus 2-m.

FIG. 15 is a diagram illustrating a flow chart of the operation of the wireless communication terminal 3-p-q when the management apparatus 1 changes the connection destination of the wireless communication terminal 3-p-q from the wireless relay apparatus 2-b to the wireless relay apparatus 2-c.

The wireless reception section 32-p-q receives the change request information from the wireless relay apparatus 2-b (Step St11), and then outputs the change request information to the connection information generating section 33-p-q. The wireless reception section 32-p-q receives the synchronization signal information of the wireless relay apparatus 2-c, which is a change destination contained in the received change request information (Step St12), and then outputs the synchronization signal information to the connection information generating section 33-p-q. The connection information generating section 33-p-q generates the connection request information containing information for making a request for connection to the wireless relay apparatus 2-c, which has the network ID contained in the synchronization signal information, the relay apparatus related information, and the terminal specific information of that wireless communication terminal 3-p-q, and then transmits the connection request information to the wireless relay apparatus 2-c via the wireless transmission section 31-p-q (Step St13). The wireless reception section 32-p-q receives the connection permission information as a response to the connection request information from the wireless relay apparatus 2-c (Step St14). The wireless reception section 32-p-q outputs the received connection permission information to the connection information generating section 33-p-q. The relay information extracting section 34-p-q extracts the assigned network address 2 from the connection permission information, and then outputs the network address 2 to the wireless transmission section 31-p-q and the wireless reception section 32-p-q. The wireless transmission section 31-p-q and the wireless reception section 32-p-q use for communication the network address 2 assigned for communicating information as the own address. The connection information generating section 33-p-q generates the connection completion information based on the input connection permission information, and then transmits the connection completion information to the wireless relay apparatus 2-c via the wireless transmission section 31-p-q (Step St15).

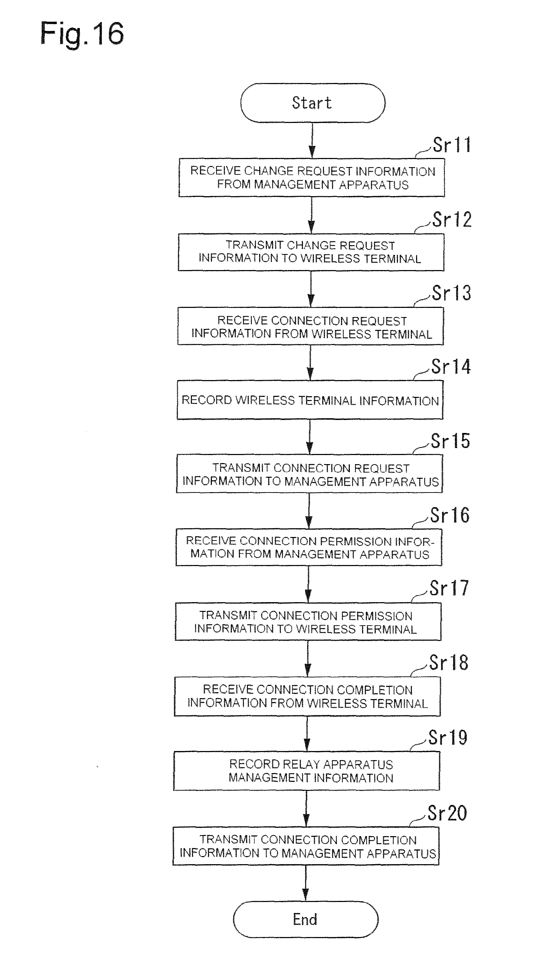

Next, FIG. 16 is a diagram illustrating a flow chart of the operations of the wireless relay apparatus 2-b and the wireless relay apparatus 2-c when the management apparatus 1 changes the connection destination of the wireless communication terminal 3-p-q from the wireless relay apparatus 2-b to the wireless relay apparatus 2-c.

The relay apparatus communication section 26-b receives the change request information from the management apparatus 1 (Step Sr11), and then outputs the change request information to the connection information extracting section 24-b. The connection information extracting section 24-b deletes, from the relay information accumulating section 25-b, information on the wireless communication terminal 3-p-q which is contained in the input change request information. The connection information extracting section 24-b transmits the input change request information to the wireless communication terminal 3-p-q via the wireless transmission section 21-b (Step Sr12). The wireless reception section 22-c receives the connection request information, which is a response to the change request information, from the wireless communication terminal 3-p-q (Step Sr13), and then outputs the connection request information to the connection information extracting section 24-c. The connection information extracting section 24-c records the input connection request information and received signal direction information in the relay information accumulating section 25-c (Step Sr14). The connection information extracting section 24-c generates information indicating the connection request containing the connection request relay information obtained by adding, to the input connection request information, the network address 1 of that wireless relay apparatus 2-c and the received signal direction information of the wireless communication terminal 3-p-q which has transmitted the connection request information. Further, the connection information extracting section 24-c outputs the generated information to the relay apparatus communication section 26-c. The relay apparatus communication section 26-c transmits the input information to the management apparatus 1 (Step Sr15).

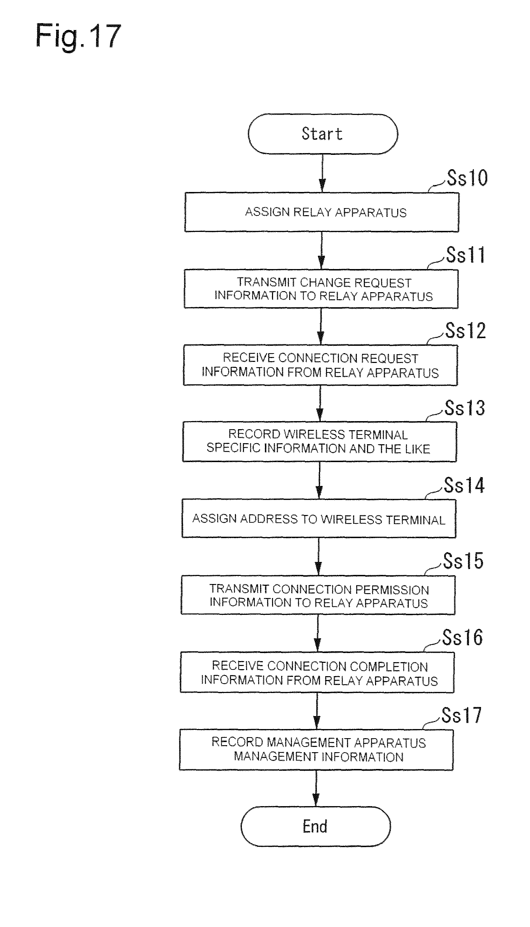

The relay apparatus communication section 26-c receives, as a response to the connection request information, the connection permission information transmitted from the management apparatus 1 (Step Sr16), and then outputs the received connection permission information to the connection information extracting section 24-c. The connection information extracting section 24-c transmits the input connection permission information to the wireless communication terminal 3-p-q via the wireless transmission section 21-c (Step Sr17). The wireless reception section 22-c receives the connection completion information from the wireless communication terminal 3-p-q (Step Sr18), and then outputs the connection completion information to the connection information extracting section 24-c. Based on the input connection completion information, the connection information extracting section 24-c records the recorded participation and network address 2 of the wireless communication terminal 3-p-q in the relay information accumulating section 25-c (Step Sr19). Subsequently, the connection information extracting section 24-c transmits the connection completion information to the management apparatus 1 via the relay apparatus communication section 26-c (Step Sr20).
Next, FIG. 17 is a diagram illustrating a flow chart of the operation of the management apparatus 1 when the connection of the wireless communication terminal 3-p-q is changed from the wireless relay apparatus 2-b to the wireless relay apparatus 2-c based on the change request information.

The relay apparatus selecting section 12 reads operation mode condition information and information relating to the wireless communication terminal 3-p-q from the management information accumulating section 14, and then selects the wireless relay apparatus 2-c, which is the connection change destination (Step Ss10). The relay apparatus selecting section 12 generates the change request information containing information indicating that the connection is to be changed to the wireless relay apparatus 2-c, and then outputs the change request information to the management apparatus communication section 11. The management apparatus communication section 11 transmits the input change request information to the wireless relay apparatus 2-b (Step Ss11). The management apparatus communication section 11 receives the connection request information from the wireless relay apparatus 2-c (Step Ss12), and then outputs the received connection request information to the connection information extracting section 13. The connection information extracting section 13 extracts the management apparatus management information from the input connection request relay information, and then records the management apparatus management information in the management information accumulating section 14. Further, the connection information extracting section 13 outputs and records the information indicating that the connection request relay information has been received to the relay apparatus selecting section 12 (Step Ss13). The relay apparatus selecting section 12 assigns the network address 2 for identification in the wireless communication system 100 to the wireless communication terminal 3-p-q which has made the request for the connection (Step Ss14).

Based on the connection request, the relay apparatus selecting section 12 generates the connection permission information which contains the assigned network address 2 and gives permission for the connection to the wireless relay apparatus 2-c, and then outputs the connection permission information to the management apparatus communication section 11. The management apparatus communication section 11 transmits the input connection permission information to the wireless relay apparatus 2-c (Step Ss15). The management apparatus communication section 11 receives the connection completion information from the wireless relay apparatus 2-c (Step Ss16). The management apparatus communication section 11 outputs the received connection completion information to the connection information extracting section 13. Based on the input connection completion information, the connection information extracting section 13 records the information indicating the participation and the network address 2 of the wireless communication terminal 3-p-q (Step Ss17).

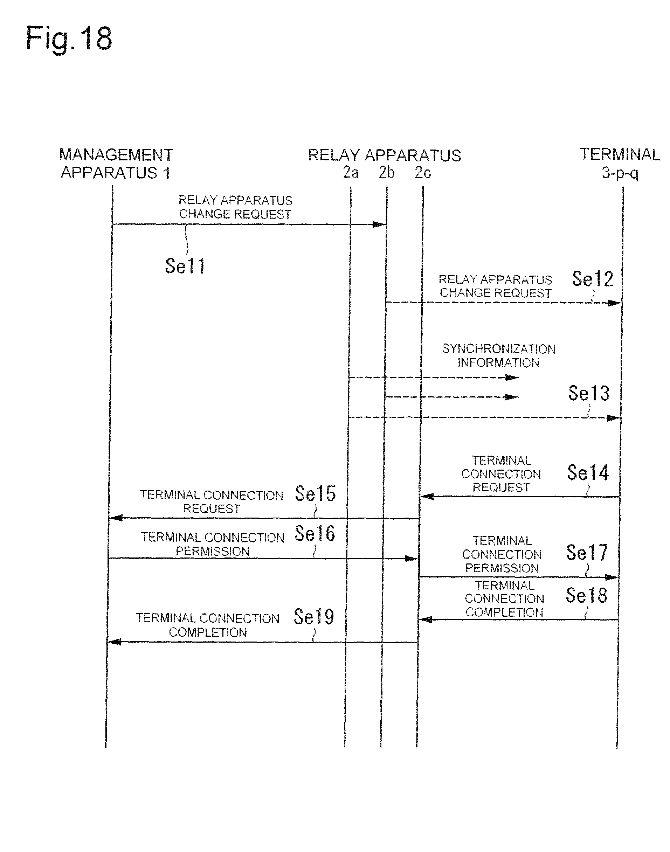

Next, FIG. 18 is a sequence diagram of the wireless communication system 100 when the connection is changed from the wireless relay apparatus 2-b, to which the wireless communication terminal 3-p-q is connected, to the wireless relay apparatus 2-c.

The relay apparatus selecting section 12 of the management apparatus 1 generates the change request information, and then transmits the generated change request information to the wireless relay apparatus 2-b via the management apparatus communication section 11 (Step Se11). The wireless reception section 22-b of the wireless relay apparatus 2-b outputs the received change request information to the connection information extracting section 24-b. Based on the change request information, the connection information extracting section 24-b deletes the information on the wireless communication terminal 3-p-q which is stored in the relay information accumulating section 25-b. Further, the connection information extracting section 24-b transmits the change request information to the wireless communication terminal 3-p-q via the wireless transmission section 21-m. The wireless reception section 32-p-q of the wireless communication terminal 3-p-q receives the change request information from the wireless relay apparatus 2-b (Step Se12). Based on the change request information, the wireless reception section 32-p-q receives the synchronization signal information of the wireless relay apparatus 2-c, which is the new connection destination, and achieves synchronization (Step Se13). After achieving synchronization with the wireless relay apparatus 2-c, the wireless reception section 32-p-q outputs information indicating that the synchronization has been achieved to the connection information generating section 33-p-q. Based on the change request information, the connection information generating section 33-p-q generates the connection request information for making a request for the connection to the wireless relay apparatus 2-c, and then transmits the generated connection request information to the wireless relay apparatus 2-c via the wireless transmission section 31-p-q. The wireless reception section 22-c of the wireless relay apparatus 2-c receives the connection request information, and then outputs the connection request information to the connection information extracting section 24-c (Step Se14).

The connection information extracting section 24-c generates the connection request relay information based on the received connection request information, and then transmits the generated connection request relay information to the management apparatus 1 via the relay apparatus communication section 26-c (Step Se15). The management apparatus communication section 11 of the management apparatus 1 receives the connection request relay information, and then outputs the connection request relay information to the connection information extracting section 13. The relay apparatus selecting section 12 receives the information indicating that the connection request relay information has been received from the connection information extracting section 13, and then generates the connection permission information. The relay apparatus selecting section 12 transmits the generated connection permission information to the wireless relay apparatus 2-c via the management apparatus communication section 11 (Step Se16). The relay apparatus communication section 26-c of the wireless relay apparatus 2-c receives the connection permission information from the management apparatus 1, and then outputs the connection permission information to the connection information extracting section 24-c. The connection information extracting section 24-c transmits the received connection permission information to the wireless communication terminal 3-p-q via the wireless transmission section 21-c (Step Se17).

The wireless reception section 32-p-q of the wireless communication terminal 3-p-q receives the connection permission information, and then outputs the connection permission information to the connection information generating section 33-p-q. The connection information generating section 33-p-q sets the network address 2 contained in the connection permission information, and then generates the connection completion information. The connection information generating section 33-p-q outputs the generated connection completion information to the wireless relay apparatus 2-c via the wireless transmission section 31-p-q (Step Se18). The wireless reception section 22-c of the wireless relay apparatus 2-c receives the connection completion information, and then outputs the connection completion information to the connection information extracting section 24-c. Based on the input connection completion information, the connection information extracting section 24-c records the relay apparatus management information in the relay information accumulating section 25-c. Subsequently, the connection information extracting section 24-c outputs the input connection completion information to the management apparatus 1 via the relay apparatus communication section 26-c (Step Se19). The management apparatus communication section 11 of the management apparatus 1 receives the connection completion information from the wireless relay apparatus 2-c, and then outputs the received connection completion information to the connection information extracting section 13. Based on the connection completion information, the connection information extracting section 13 updates the management apparatus management information stored in the management information accumulating section 14.

Through the operations described above, the wireless relay apparatus to which the wireless communication terminal 3-p-q is connected is changed from the wireless relay apparatus 2-b to the wireless relay apparatus 2-c. In order to achieve an improvement in communication quality of the wireless communication system 100, the management apparatus 1 assigns an appropriate wireless relay apparatus 2-m to the wireless communication terminal 3-p-q, and the above-mentioned operations are performed as the system. As a result, the communication quality of the wireless communication system 100 becomes improved.

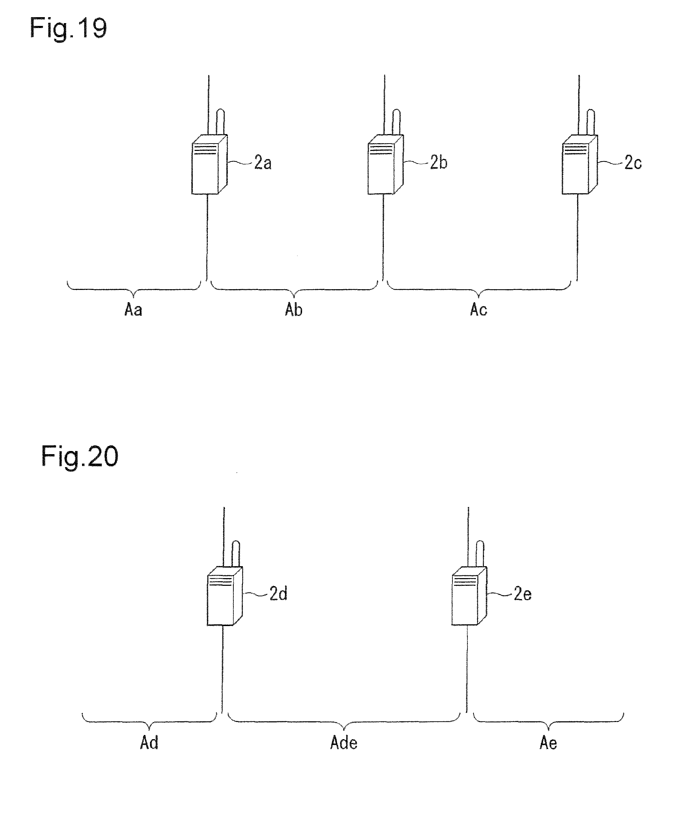

Next, with reference to FIG. 19 to FIG. 21, description is given of the operation mode information, which is condition information used for changing the assignment of the wireless relay apparatus 2-m.

FIG. 19 is a diagram illustrating the operation mode condition which uses the direction condition information. FIG. 19 illustrates an example of area assignment in a case where, with a direction toward the top of the drawing sheet set as a reference, an area ranging clockwise from 180° to 360° is set as the operation mode condition information. As the operation mode information of the wireless relay apparatus 2-a, the wireless relay apparatus 2-b, and the wireless relay apparatus 2-c, such areas are set that, with the wireless relay apparatus 2-a, the wireless relay apparatus 2-b, and the wireless relay apparatus 2-c set as a center, respectively, ranges clockwise from 180° to 360° with the direction toward the top of the drawing sheet set as the reference. Accordingly, the connection destination of a wireless communication terminal 3-p-q existing in an area Aa is changed to the wireless relay apparatus 2-a. Further, the connection destination of a wireless communication terminal 3-p-q existing in an area Ab is changed to the wireless relay apparatus 2-b. Further, the connection destination of a wireless communication terminal 3-p-q existing in an area Ac is changed to the wireless relay apparatus 2-c.

In this case, the relay apparatus selecting section 12 of the management apparatus 1 makes a comparison between the received signal direction information and the operation mode condition of the management apparatus management information to determine a wireless communication terminal 3-p-q which does not satisfy the condition, and then performs the connection change with respect to the wireless communication terminal 3-p-q. In the electronic shelf label system, the above-mentioned setting is convenient for managing a large number of electronic shelf labels in segmented areas such as selves.

The actual processing of the management apparatus 1 is described in accordance with the flow chart of FIG. 17. In Step Ss10, the relay apparatus selecting section 12 of the management apparatus 1 reads the management apparatus management information from the management information accumulating section 14, and then extracts the received signal direction information of the wireless communication terminal 3-p-q associated with the wireless relay apparatus 2-a. Then, in a case where there is a wireless communication terminal 3-p-q whose received signal direction does not satisfy the operation mode condition information (here, ranging clockwise from 180° to 360°), the relay apparatus selecting section 12 further extracts the relay apparatus related information of that wireless communication terminal 3-p-q. In a case where there is information regarding a plurality of wireless relay apparatus in the relay apparatus related information, the relay apparatus selecting section 12 determines, as the connection change destination, such a wireless relay apparatus that is a wireless relay apparatus other than the wireless relay apparatus 2-a and has, for example, the strongest received signal strength, and then generates the change request information to output the change request information to the management apparatus communication section 11. Subsequently, the processing of Step Ss11 and subsequent steps is performed. It should be noted that the wireless communication terminal 3-p-q which has received the change request information regarding the connection destination performs the processing in accordance with the flow chart of FIG. 15, in which the wireless communication terminal 3-p-q transmits the connection request to the wireless relay apparatus which is contained in the change request information and is to become the new connection destination, to thereby change the connection destination.

FIG. 20 is a diagram illustrating the operation mode condition which uses the direction condition information and the strength condition information in combination. With regard to the direction condition information, for the wireless relay apparatus 2-d, with the direction toward the top of the drawing sheet set as the reference, an area ranging clockwise from 180° to 360° is set as the operation mode condition. For the wireless relay apparatus 2-e, with the direction toward the top of the drawing sheet set as the reference, an area ranging clockwise from 0° to 180° is set as the operation mode condition. Further, as the strength condition information, a range is set for the received signal strength information. As a result, the connection of a wireless communication terminal 3-p-q existing in an area Ade is changed according to the strength condition information set in the wireless relay apparatus 2-m. Further, the connection destination of a wireless communication terminal 3-p-q existing in an area Ad is changed to the wireless relay apparatus 2-d. Further, the connection destination of a wireless communication terminal 3-p-q existing in an area Ae is changed to the wireless relay apparatus 2-e.

The actual processing of the management apparatus 1 is described in accordance with the flow chart of FIG. 17. In Step Ss10, the relay apparatus selecting section 12 of the management apparatus 1 reads the management apparatus management information from the management information accumulating section 14, and then extracts the received signal direction information of the wireless communication terminal 3-p-q associated with the wireless relay apparatus 2-d. Then, in a case where there is a wireless communication terminal 3-p-q whose received signal direction does not fall within the area ranging clockwise from 180° to 360°, the relay apparatus selecting section 12 further extracts the relay apparatus related information of the corresponding wireless communication terminal 3-p-q, and then acquires information regarding a wireless relay apparatus available for the corresponding wireless communication terminal 3-p-q to connect to. In a case where there is information regarding a plurality of wireless relay apparatus in the relay apparatus related information, the relay apparatus selecting section 12 determines, as the connection change destination, a wireless relay apparatus which has the strongest received signal strength. In a case where the determined wireless relay apparatus is a wireless relay apparatus other than the wireless relay apparatus 2-d, the relay apparatus selecting section 12 generates the change request information, and then outputs the change request information to the management apparatus communication section 11. Subsequently, the processing of Step Ss11 and subsequent steps is performed. It should be noted that the wireless communication terminal 3-p-q which has received the change request information regarding the connection destination performs the processing in accordance with the flow chart of FIG. 15, in which the wireless communication terminal 3-p-q transmits the connection request to the wireless relay apparatus which is contained in the change request information and is to become the new connection destination, to thereby change the connection destination. The relay apparatus selecting section 12 of the management apparatus 1 performs, for the wireless relay apparatus 2-e, the same processing as the processing performed for the wireless relay apparatus 2-d.

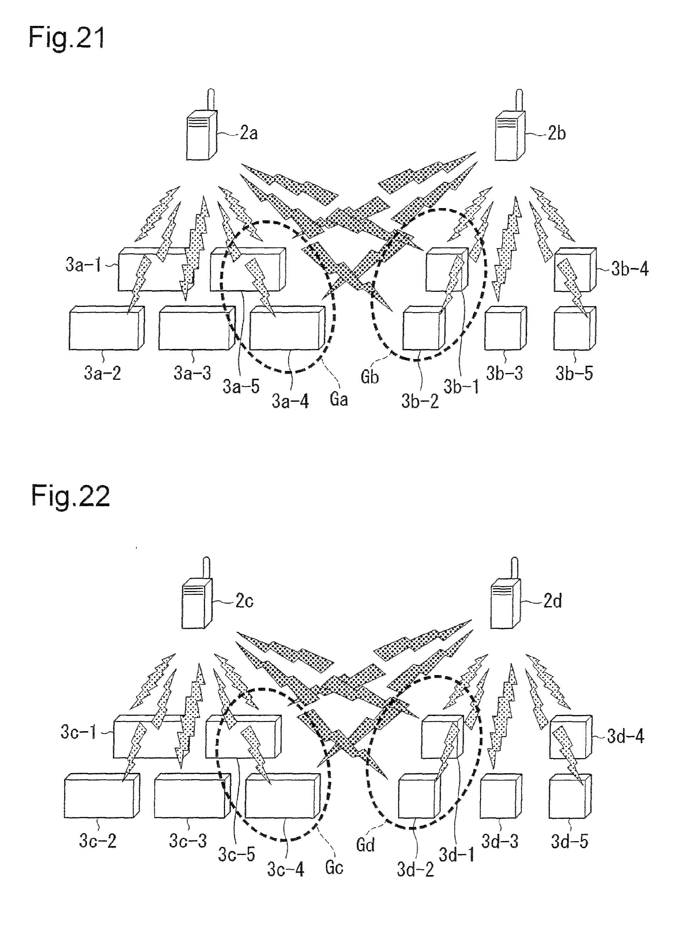

FIG. 21 is a diagram illustrating the operation mode condition which uses the attribute condition information. This operation mode condition is a condition which uses, of the attribute information contained in the terminal specific information on the wireless communication terminal 3-p-q, the data size of communication performed by the wireless communication terminal 3-p-q. For example, the operation mode condition is set such that communication amounts of the wireless relay apparatus 2-m are equalized. FIG. 21 illustrates the wireless relay apparatus 2-a and the wireless relay apparatus 2-b, which have the same configuration as the wireless relay apparatus 2-m. Further, wireless communication terminals 3-a-1, ···, 3-a-5 have an attribute of having a large communication data size, and are connected to the wireless relay apparatus 2-a. Further, the wireless communication terminals 3-a-1, ···, 3-a-5 have the same configuration as the wireless communication terminal 3-p-q. Further, wireless communication terminals 3-b-1, ···, 3-b-5 have an attribute of having a small communication data size, and are connected to the wireless relay apparatus 2-b. Further, the wireless communication terminals 3-b-1, ···, 3-b-5 have the same configuration as the wireless communication terminal 3-p-q.

As a result of the operation mode condition, the connection destinations of the wireless communication terminals 3-a-4 and 3-a-5, which are enclosed by a broken line Ga, are changed to the wireless relay apparatus 2-b. Further, the connection destinations of the wireless communication terminals 3-b-1 and 3-b-2, which are enclosed by a broken line Gb, are changed to the wireless relay apparatus 2-a. The above-mentioned setting may shorten the communication processing time of the entire wireless communication system, resulting in an improvement in communication quality.

The actual processing of the management apparatus 1 is described in accordance with the flow chart of FIG. 17. In Step Ss10, the relay apparatus selecting section 12 of the management apparatus 1 reads the management apparatus management information from the management information accumulating section 14, and then extracts the terminal specific information which belongs to the wireless relay apparatus (2-a and 2-b), between which the equalization of the communication amounts is to be performed. As illustrated in FIG. 6, the terminal specific information contains information regarding the size of display data, such as display type, display size, and display color. Here, assuming that the display size (only L and M are used) has a strong correlation with the communication amount, the equalization is performed. Assuming that L requires twice the communication amount of M, in the case of the system of FIG. 21, if the connection destinations of two wireless communication terminals connected to the wireless relay apparatus 2-a are changed to the wireless relay apparatus 2-b, and the connection destinations of two wireless communication terminals connected to the wireless relay apparatus 2-b are changed to the wireless relay apparatus 2-a, the equalization of the communication amounts is substantially achieved. Thus, as a method of selecting a total of four wireless communication terminals to be subjected to the connection change, the strengths of the received signals are used.

The relay apparatus selecting section 12 of the management apparatus 1 reads the management apparatus management information from the management information accumulating section 14, and then extracts the relay apparatus management information of the wireless communication terminal associated with the wireless relay apparatus (first, 2-a) for which the equalization of the communication amount is to be performed. Then, the relay apparatus selecting section 12 selects two wireless communication terminals which are capable of connecting to the wireless relay apparatus 2-b as well and have strong received signal strengths from the wireless relay apparatus 2-b, and then generates, with respect to the two wireless communication terminals, the change request information for changing the connection destination to the wireless relay apparatus 2-b to output the change request information to the management apparatus communication section 11. Subsequently, the processing of Step Ss11 and subsequent steps is performed. It should be noted that the wireless communication terminal 3-p-q which has received the change request information regarding the connection destination performs the processing in accordance with the flow chart of FIG. 15, in which the wireless communication terminal 3-p-q transmits the connection request to the wireless relay apparatus which is contained in the change request information and is to become the new connection destination, to thereby change the connection destination. Further, the processing of changing the connection destinations of the two wireless communication terminals from the wireless relay apparatus 2-b to the wireless relay apparatus 2-a is performed in a similar manner. It should be noted that a method of selecting a total of four wireless communication terminals to be subjected to the connection change is not limited to the strengths of the received signals, and the directions of the received signals or the like may be used.

FIG. 22 is a diagram illustrating the operation mode condition which uses the use condition information. This operation mode condition is a condition which uses, of the use attribute information contained in the terminal specific information on the wireless communication terminal 3-p-q, the frequency of communication performed by the wireless communication terminal 3-p-q. The information indicating the rewrite frequency illustrated in FIG. 6 is set as "high", "intermediate", or "low", and indicates the frequency of communication. Further, this information is converted into a numerical value for use. For example, the information is represented by the rewrite frequency per day. For example, the operation mode condition is set such that rewrite frequencies of the wireless relay apparatus 2-m are equalized. FIG. 22 illustrates the wireless relay apparatus 2-c and the wireless relay apparatus 2-d, which have the same configuration as the wireless relay apparatus 2-m. Further, wireless communication terminals 3-c-1, ···, 3-c-5 have an attribute of having a high frequency of communication, and are connected to the wireless relay apparatus 2-c. Further, the wireless communication terminals 3-c-1, ···, 3-c-5 have the same configuration as the wireless communication terminal 3-p-q. Further, wireless communication terminals 3-d-1, ···, 3-d-5 have an attribute of having a low frequency of communication, and are connected to the wireless relay apparatus 2-d. Further, the wireless communication terminals 3-d-1, ···, 3-d-5 have the same configuration as the wireless communication terminal 3-p-q.

As a result of the operation mode condition, the connection destinations of the wireless communication terminals 3-c-4 and 3-c-5, which are enclosed by a broken line Gc, are changed to the wireless relay apparatus 2-d. Further, the connection destinations of the wireless communication terminals 3-d-1 and 3-d-2, which are enclosed by a broken line Gd, are changed to the wireless relay apparatus 2-c.

With the above-mentioned setting, the communication frequencies are equalized in the entire wireless communication system, resulting in an improvement in reliability. Further, the operation mode condition for making a wireless communication terminal 3-p-q having the rewrite frequency of "low" connect to a specific wireless relay apparatus 2-m enables the wireless line of the wireless communication terminal 3-p-q connected to that wireless relay apparatus 2-m to be improved in reliability.

Here, description is given of an application example in which the attribute condition information is used as the operation mode condition. A wireless communication speed between the wireless relay apparatus 2-m and the wireless communication terminal 3-p-q is 100 KB/second. Further, in the wireless communication system, there are 3,000 wireless communication terminals 3-L-s (s=1, 2, ···, 000) having a communication data size of 10 KB, which is acquired from the terminal attribute information, and 3,000 wireless communication terminals 3-S-t (t=1, 2, ···, 000) having a communication data size of 1 KB, which is acquired from the terminal attribute information. Further, the wireless communication system 100 is provided with two wireless relay apparatus of the wireless relay apparatus 2-a and the wireless relay apparatus 2-b. Here, the wireless communication terminal 3-L-s and the wireless communication terminal 3-S-t have the same configuration as the wireless communication terminal 3-p-q, whereas the wireless relay apparatus 2-a and the wireless relay apparatus 2-b have the same configuration as the wireless relay apparatus 2-m. Further, as for the connection state, the wireless relay apparatus 2-a is connected to all the wireless communication terminals 3-L-s, and the wireless relay apparatus 2-b is connected to all the wireless communication terminals 3-S-t. Description is given with the above-mentioned state as a precondition.

In this state, the communication time of the wireless relay apparatus 2-a is 10 KB×3,000/(100 KB/second)=300 seconds. Further, the communication time of the wireless relay apparatus 2-b is 1 KB×3,000/(100 KB/second)=30 seconds. Further, the communication processing time of the wireless communication system 100, that is, a period of time starting when communication is started and ending when the communication is finished is 300 seconds.

Here, in order to satisfy the communication quality condition of the wireless communication system 100, the operation mode condition is changed so that the communication time of the wireless communication system 100 becomes equal to or shorter than 180 seconds. The operation mode conditions of the wireless relay apparatus 2-a and the wireless relay apparatus 2-b are set so that 1,500 wireless communication terminals 3-L-s and 1,500 wireless communication terminals 3-S-t are connected to each of the wireless relay apparatus 2-a and the wireless relay apparatus 2-b. In the wireless communication system 100, based on the operation mode conditions, the connection change is performed for the wireless communication terminals 3-p-q.

Through the equalization of the communication amounts between the wireless relay apparatus 2-a and the wireless relay apparatus 2-b, the respective communication times are obtained as follows. The communication time of the wireless relay apparatus 2-a is 10 KB×(3,000/2)/(100 KB/seconds)+1 KB×(3,000/2)/(100 KB/seconds)=165 seconds. Further, the communication time of the wireless relay apparatus 2-b is 10 KB×(3,000/2)/(100 KB/seconds)+1 KB×(3,000/2)/(100 KB/seconds)=165 seconds.

The wireless communication system 100 uses the sequence for the connection change illustrated in FIG. 18, in which the management apparatus 1 changes the connection destinations of the 1,500 wireless communication terminals 3-L-s to the wireless relay apparatus 2-b. Further, the management apparatus 1 changes the connection destinations of the 1,500 wireless communication terminals 3-S-t to the wireless relay apparatus 2-a. With this configuration, the equalization of the communication amounts is performed, thereby realizing an improvement in communication speed of the entire wireless communication system 100.

Further, in the state in which the above-mentioned assignment change has been performed, in a case where the communication quality condition for communication in the wireless communication system 100 requires the communication processing time of the wireless relay apparatus 2-b to be set to become equal to or shorter than 60 seconds, the operation mode condition is set so that the communication amount of the wireless relay apparatus 2-b becomes the smallest, that is, that the communication time becomes the shortest. Specifically, the operation mode condition is set so that all the wireless communication terminals 3-S-t alone are assigned to the wireless relay apparatus 2-b.
The wireless communication system 100 uses the sequence for the connection change illustrated in FIG. 18, in which only the connection destinations of all the wireless communication terminals 3-S-t are changed to the wireless relay apparatus 2-b. As a result of this connection change, the communication time of the wireless relay apparatus 2-b becomes 1 KB×3,000/(100 KB/seconds)=30 seconds. Further, the communication time of the wireless relay apparatus 2-a becomes 10 KB×3,000/(100 KB/seconds)=300 seconds. This connection change allows the communication quality condition to be satisfied.

As has been described above, through the setting of the communication quality condition and the operation mode condition, the communication processing time is shortened for the whole or a part of the wireless communication system 100, thereby enabling communication of high efficiency.

Incidentally, the wireless relay apparatus 2-m has a tendency to deteriorate in wireless quality as the risk of a failure increases. For example, when a communication error rate, which is one factor of the wireless quality, increases, the number of times a retry is performed for the wireless communication increases, which therefore prevents communication of high efficiency from being performed. Accordingly, if a malfunction of a wireless relay apparatus 2-m is recognized in advance, and the connection destination of the wireless communication terminal 3-p-q connected to that wireless relay apparatus 2-m is changed to a wireless relay apparatus 2-m having no malfunction, it becomes possible to not only perform communication of high efficiency in the wireless communication system as a whole but also avoid a worst situation in which information is failed to be transmitted/received due to failure occurrence. Further, a situation in which the wireless communication terminal 3-p-q connected to that wireless relay apparatus 2-m carries out a transmission retry or searches for another connection destination is also avoided, and hence it is possible to prevent needless power consumption by the wireless communication terminal 3-p-q. In addition, because a malfunctioning wireless relay apparatus 2-m is removed from the system for a check prior to a failure, there is a possibility that tracking down the cause of a failure or making a repair may become easier. Therefore, description is given of an example in which the connection destination of the wireless communication terminal 3-p-q connected to a wireless relay apparatus 2-m having a high risk of a failure is changed to a wireless relay apparatus 2-m having no malfunction.

It is assumed that, when the wireless communication terminal 3-p-q receives the synchronization signal information from the currently-connected wireless relay apparatus 2-m, the wireless communication terminal 3-p-q stores a reception failure rate thereof. In a case where the reception failure rate exceeds a predetermined rate, or in a case where a transmission instruction for the reception failure rate is received from the management apparatus 1 via the wireless relay apparatus 2-m, the wireless communication terminal 3-p-q transmits the reception failure rate to the management apparatus 1 via the wireless relay apparatus 2-m.

The management apparatus 1 receives the reception failure rate from the wireless communication terminal 3-p-q via the wireless relay apparatus 2-m. In a case where the wireless communication terminal 3-p-q judges that the reception failure rate has exceeded the predetermined given rate and transmits the reception failure rate, the management apparatus 1 transmits the transmission instruction for the reception failure rate to another wireless communication terminal 3-p-q connected to that wireless relay apparatus 2-m. The another wireless communication terminal 3-p-q receives the transmission instruction for the reception failure rate, and then transmits the reception failure rate to the management apparatus 1. With this configuration, it becomes possible for the management apparatus 1 to acquire the reception failure rates from a large number of wireless communication terminals 3-p-q regularly or in the case where the reception failure rate has exceeded the predetermined rate in a certain wireless communication terminal 3-p-q, and to check the status of the wireless relay apparatus 2-m.

For example, in a case where a mean value of the reception failure rates received from the large number of wireless communication terminals 3-p-q has exceeded a given rate, the management apparatus 1 determines to change the connection destinations of the wireless communication terminals 3-p-q currently connected to the wireless relay apparatus 2-m. The relay apparatus selecting section 12 of the management apparatus 1 reads the management apparatus management information from the management information accumulating section 14, and then extracts the relay apparatus management information of the wireless communication terminal 3-p-q associated with that wireless relay apparatus 2-m. Then, in the case where there is information regarding a plurality of wireless relay apparatus in the relay apparatus related information, the relay apparatus selecting section 12 determines, as the connection change destination, such a wireless relay apparatus that is a wireless relay apparatus other than that wireless relay apparatus 2-m and has, for example, the highest received signal strength, and then generates the change request information to output the change request information to the management apparatus communication section 11. Subsequently, the processing of Step Ss11 and subsequent steps of FIG. 17 is performed. It should be noted that the wireless communication terminal 3-p-q which has received the change request information regarding the connection destination performs the processing in accordance with the flow chart of FIG. 15, in which the wireless communication terminal 3-p-q transmits the connection request to the wireless relay apparatus which is contained in the change request information and is to become the new connection destination, to thereby change the connection destination.

By performing the processing described above, it becomes possible to not only perform communication of high efficiency in the wireless communication system as a whole but also avoid the worst situation in which information is failed to be transmitted/received due to failure occurrence.

It should be noted that the reception failure rate for the synchronization signal information is herein used as the wireless communication quality, but the present invention is not limited thereto. For example, a packet error rate or a frame error rate for normal communication data may be used.

Further, at the time of connecting to the wireless communication system 100, the wireless communication terminal 3-p-q connects to a wireless relay apparatus 2-m which has transmitted the first-received synchronization signal information, but the wireless communication terminal 3-p-q may select the connection destination based on the received signal strength. Further, as the production number for identifying the wireless communication terminal 3-p-q, a media access control (MAC) address of 8 bytes may be used.

Further, the information indicating the voltage of the wireless communication terminal 3-p-q is expressed in percentage, but may be expressed using the voltage. Further, the received signal strength of the wireless communication terminal 3-p-q is expressed in percentage, but a signal to be output in accordance with the implementation of a wireless reception section 31 m-M (RSSI: Received Signal Strength Indicator), such as an 8-bit signal, may be used. Further, for the received signal strength to be determined by the wireless communication terminal 3-p-q, the synchronization signal information transmitted from the wireless relay apparatus 2-m is used, but beacon signals which are transmitted with different frequencies among wireless relay apparatus 2-m may be used for the determination.

The above-mentioned management apparatus 1, wireless relay apparatus 2-m, and wireless communication terminal 3-p-q include a computer system therein. The above-mentioned processing steps in which the wireless communication terminal 3-p-q connects to the wireless communication system 100 and the above-mentioned processing steps in which the connection is changed from the wireless relay apparatus 2-b to which the wireless communication terminal 3-p-q is connected to the wireless relay apparatus 2-c are stored in a computer-readable recording medium in the form of a program. The computer reads the program, and then executes the program, to thereby perform the above-mentioned processing. Here, the computer-readable recording medium represents a magnetic disk, a magneto-optical disk, a CD-ROM, a DVD-ROM, a semiconductor memory, or the like. Further, the computer program may be distributed to computers via communication lines, and the computers which have received the distribution may execute the program.

### Industrial Applicability

The present invention is suitable for a wireless communication system in which a large number of wireless communication terminals, such as electronic shelf label terminals, are connected to a plurality of wireless relay apparatus to perform communication, and a management apparatus therefor, but is not limited thereto.

## Claims

1. A wireless communication system, comprising:
a plurality of wireless relay apparatus;
a management apparatus; and
wireless communication terminals each connected to any one of the plurality of wireless relay apparatus, wherein:
the management apparatus comprises:
a management information accumulating section for predetermining and storing connection condition information relating to a condition for selecting the wireless communication terminal which is to be connected to the any one of the plurality of wireless relay apparatus;
a relay apparatus selecting section for selecting one of the plurality of wireless relay apparatus, to which the wireless communication terminal is to be connected next, based on connection state information indicating a connection state of the wireless communication terminal and the connection condition information, and generating change request information indicating that a connection destination of the wireless communication terminal is to be changed to the selected one of the plurality of wireless relay apparatus, the connection state information being contained in connection request information with which the wireless communication terminal makes a request for connection to one of the plurality of wireless relay apparatus; and
a management apparatus communication section for transmitting the change request information to the wireless communication terminal via the any one of the plurality of wireless relay apparatus, which is connected to the wireless communication terminal;
the any one of the plurality of wireless relay apparatus is connected to the management apparatus and the wireless communication terminal to transfer information; and
the wireless communication terminal transmits the connection request information to the management apparatus via the one of the plurality of wireless relay apparatus, to which the wireless communication terminal is to be connected next, the connection request information indicating a request for connection to the one of the plurality of wireless relay apparatus, to which the wireless communication terminal is to be connected next, based on the change request information received from the any one of the plurality of wireless relay apparatus, to which the wireless communication terminal is connected.

2. A wireless communication system according to claim 1, wherein:
the connection state information contains information indicating an attribute previously allocated to the wireless communication terminal;
the connection condition information contains, as a condition, information indicating an attribute previously allocated to the wireless communication terminal; and
the relay apparatus selecting section of the management apparatus selects the one of the plurality of wireless relay apparatus, to which the wireless communication terminal is to be connected next, based on the information indicating the attribute previously allocated to the wireless communication terminal, which is contained in the connection state information, and the connection condition.

3. A wireless communication system according to claim 1, wherein:
the connection state information contains information indicating a received signal strength obtained at the wireless communication terminal with regard to a signal transmitted from the any one of the plurality of wireless relay apparatus;
the connection condition information contains, as a condition, information indicating a received signal strength obtained at the wireless communication terminal with regard to a signal transmitted from the any one of the plurality of wireless relay apparatus; and
the relay apparatus selecting section of the management apparatus selects the one of the plurality of wireless relay apparatus, to which the wireless communication terminal is to be connected next, based on the information indicating the received signal strength obtained at the wireless communication terminal, which is contained in the connection state information, and the connection condition information.

4. A wireless communication system according to claims 1, wherein:
the connection state information contains information indicating wireless quality obtained at the wireless communication terminal with regard to a signal transmitted from the any one of the plurality of wireless relay apparatus;
the connection condition information contains, as a condition, information indicating wireless quality obtained at the wireless communication terminal with regard to a signal transmitted from the any one of the plurality of wireless relay apparatus; and
the relay apparatus selecting section of the management apparatus selects the one of the plurality of wireless relay apparatus, to which the wireless communication terminal is to be connected next, based on the information indicating the wireless quality obtained at the wireless communication terminal, which is contained in the connection state information, and the connection condition information.

5. A wireless communication system according to any one of claims 1 to 4, wherein:
the any one of the plurality of wireless relay apparatus determines, in a case where the connection request information is received from the wireless communication terminal, a direction of the wireless communication terminal, and adds, as the connection state information, information indicating the determined direction of the wireless communication terminal to the received connection request information, to thereby transmit the connection request information to the management apparatus;
the connection condition information contains, as a condition, information indicating a direction of the wireless communication terminal; and
the relay apparatus selecting section of the management apparatus selects the one of the plurality of wireless relay apparatus, to which the wireless communication terminal is to be connected next, based on the information indicating the direction of the wireless communication terminal, which is contained in the connection state information, and the connection condition information.

6. A wireless communication system according to any one of claims 1 to 4, wherein:
the management apparatus includes the connection condition information which varies according to a state in which the wireless communication system is used; and
the relay apparatus selecting section of the management apparatus extracts the connection condition information according to the state of the wireless communication system, and selects the one of the plurality of wireless relay apparatus, to which the wireless communication terminal is to be connected next, based on the extracted connection condition information and the connection condition information.

7. A connection destination changing method used for a wireless communication system comprising:
a plurality of wireless relay apparatus;
a management apparatus; and
wireless communication terminals each connected to any one of the plurality of wireless relay apparatus,
the connection destination changing method comprising:
previously storing, by a management information accumulating section of the management apparatus, connection condition information relating to a condition for selecting the wireless communication terminal for each of the plurality of wireless relay apparatus;
storing, by the management information accumulating section of the management apparatus, connection state information indicating a characteristic of the wireless communication terminal, which is contained in connection request information for making a request for connection to the any one of the plurality of wireless relay apparatus, the connection request information being transmitted from the wireless communication terminal via the any one of the plurality of wireless relay apparatus;
reading, by a relay apparatus selecting section of the management apparatus, the connection condition information stored in the management information accumulating section and the connection state information, and selecting one of the plurality of wireless relay apparatus, to which the wireless communication terminal is to be connected next, based on the connection condition information;
generating, by the relay apparatus selecting section of the management apparatus, change request information indicating that the connection is to be changed to the selected one of the plurality of wireless relay apparatus;
transmitting, by a management apparatus communication section of the management apparatus, the change request information to the wireless communication terminal via the any one of the plurality of wireless relay apparatus, to which the wireless communication terminal is currently connected; and
receiving, by the wireless communication terminal, the change request information from the management apparatus via the any one of the plurality of wireless relay apparatus, to which the wireless communication terminal is currently connected, and generating connection request information for making a request for next connection to transmit the connection request information to the management apparatus via the one of the plurality of wireless relay apparatus, for which the request for the next connection has been made.

8. A management apparatus used in a wireless communication system comprising:
wireless communication terminals;
wireless relay apparatus for relaying connection request information with which the wireless communication terminal makes a request for connection; and
the management apparatus,
the management apparatus comprising:
a management information accumulating section for previously storing connection condition information relating to a condition for selecting the wireless communication terminal for each of the wireless relay apparatus;
a relay apparatus selecting section for selecting one of the wireless relay apparatus, to which the wireless communication terminal is to be connected next, based on connection state information indicating a characteristic of the wireless communication terminal, which is contained in the connection request information with which the wireless communication terminal makes the request for the connection to a wireless relay apparatus via the wireless relay apparatus, and the connection condition information, and generating change request information indicating that a connection destination of the wireless communication terminal is to be changed to the selected one of the wireless relay apparatus; and
a management apparatus communication section for transmitting the change request information to the wireless communication terminal via the wireless relay apparatus connected to the wireless communication terminal, and receiving the connection request information and connection completion information from the wireless communication terminal via the one of the wireless relay apparatus, to which the wireless communication terminal is to be connected next.

9. A management apparatus according to claim 8, wherein:
the connection state information contains information indicating an attribute previously allocated to the wireless communication terminal;
the connection condition information contains, as a condition, information indicating an attribute previously allocated to the wireless communication terminal; and
the relay apparatus selecting section selects the one of the wireless relay apparatus, to which the wireless communication terminal is to be connected next, based further on the information indicating the attribute previously allocated to the wireless communication terminal, which is contained in the connection state information, and the connection condition information.

10. A management apparatus according to claim 8, wherein:
the connection state information contains information indicating a received signal strength obtained at the wireless communication terminal with regard to a signal transmitted from the wireless relay apparatus;
the connection condition information contains, as a condition, information indicating a received signal strength obtained at the wireless communication terminal with regard to a signal transmitted from the wireless relay apparatus; and
the relay apparatus selecting section selects the one of the wireless relay apparatus, to which the wireless communication terminal is to be connected next, based further on the information indicating the received signal strength obtained at the wireless communication terminal with regard to the signal transmitted from the wireless relay apparatus, which is contained in the connection state information, and the connection condition information.

11. A management apparatus according to claims 8, wherein:
the connection state information contains information indicating a direction of the wireless communication terminal, which is determined by the wireless relay apparatus;
the connection condition information contains, as a condition, information indicating a direction of the wireless communication terminal, which is determined by the wireless relay apparatus; and
the relay apparatus selecting section selects the one of the wireless relay apparatus, to which the wireless communication terminal is to be connected next, based further on the information indicating the direction of the wireless communication terminal, which is contained in the connection state information and determined by the wireless relay apparatus, and the connection condition information.
